# EUROPEAN PATENT SPECIFICATION

(11) **EP 4 346 076 B1**
(45) Date of publication and mention of the grant of the patent: **25.02.2026**
(21) Application number: 23198379.2
(22) Date of filing: 19.09.2023
(51) Int. Cl.: H02M 1/32, H02M 3/158, H02J 7/00

(54) **VOLTAGE CONVERSION APPARATUS, BASE STATION POWER SUPPLY SYSTEM, AND CONTROL METHOD**
SPANNUNGSUMWANDLUNGSVORRICHTUNG, BASISSTATIONSSTROMVERSORGUNGSSYSTEM UND STEUERUNGSVERFAHREN
APPAREIL DE CONVERSION DE TENSION, SYSTÈME D'ALIMENTATION ÉLECTRIQUE DE STATION DE BASE ET PROCÉDÉ DE COMMANDE

(30) Priority: 29.09.2022 CN 202211200865
(43) Date of publication of application: 03.04.2024
(73) Proprietor: Huawei Digital Power Technologies Co., Ltd., Shenzhen, Guangdong 518043 (CN)
(72) Inventor: CAI, Yi, Shenzhen, 518043 (CN); YU, Hua, Shenzhen, 518043 (CN); LIU, Xiaoyu, Shenzhen, 518043 (CN)
(74) Representative: Gill Jennings & Every LLP

(56) References cited:
- EP-B1- 2 973 968
- US-A1- 2008 203 990
- JIA-NA LOU ET AL: "A green-switch controller IC for cascade buck boost converter with seamless transition over entire input and load range", MICROELECTRONICS JOURNAL, MACKINTOSH PUBLICATIONS LTD. LUTON, GB, vol. 42, no. 10, 14 June 2011 (2011-06-14), pages 1151 - 1163, XP028276260, ISSN: 0026-2692, [retrieved on 20110705], DOI: 10.1016/J.MEJO.2011.06.003
- OUCHI TAKAYUKI ET AL: "Stable startup of seamless controlled parallel bidirectional DC-DC converter", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8 September 2015 (2015-09-08), pages 1 - 9, XP032800234, DOI: 10.1109/EPE.2015.7309279
- LEE ALBERT T L ET AL: "Single-Inductor Multiple-Output Buck Hybrid Converter with Simultaneous AC and DC Outputs for Multi-Coil Wireless Power Transfer Applications", 2019 IEEE APPLIED POWER ELECTRONICS CONFERENCE AND EXPOSITION (APEC), IEEE, 17 March 2019 (2019-03-17), pages 884 - 889, XP033556107, [retrieved on 20190524], DOI: 10.1109/APEC.2019.8722035

## Description

### TECHNICAL FIELD

This application relates to the field of power electronics technologies, and in particular, to a voltage conversion apparatus, a base station power supply system, and a control method.

### BACKGROUND

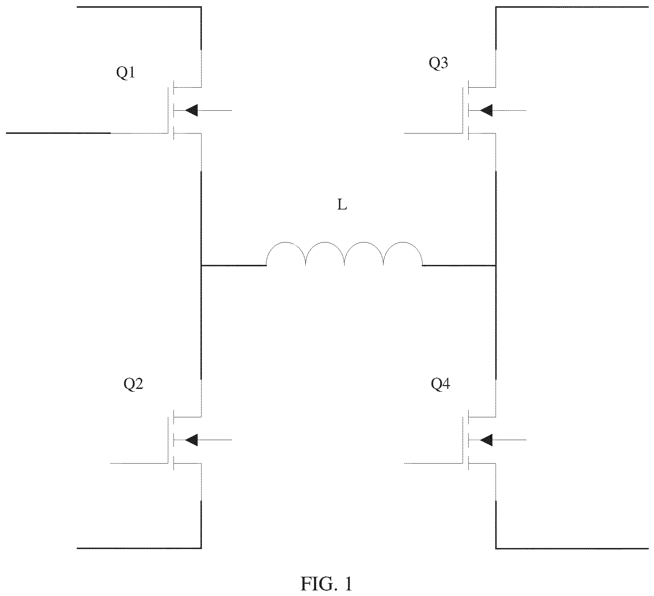

In the field of power electronics technologies, a transformer circuit in a power supply system may convert an input voltage provided by an input terminal (for example, a power supply terminal) into an output voltage that matches an output terminal (for example, a load terminal), to supply power to the output terminal through the input terminal. An H-bridge transformer circuit is widely used because it can be used in both charging and discharging scenarios and has a large port voltage range and strong adaptability. FIG. 1 is a schematic diagram of a structure of an H-bridge transformer circuit. As shown in FIG. 1, the H-bridge transformer circuit (also referred to as a transformer circuit below) includes an inductor and four switching transistors. A first switching transistor Q1 and a second switching transistor Q2 are connected in series to a first bridge arm midpoint, a third switching transistor Q3 and a fourth switching transistor Q4 are connected in series to a second bridge arm midpoint, and the inductor is connected to the two bridge arm midpoints. The transformer circuit may switch between a plurality of power supply modes (for example, boost discharging, buck discharging, boost charging, and buck charging) according to an application scenario. During actual application, because a fault (for example, a load terminal is short-circuited or overloaded) may exist in the power supply system, a switching transistor in the transformer circuit needs to be disconnected, to cut off an electrical connection between a power supply and a load. In the conventional technology, the power supply system usually needs to sample a port voltage and a current of the transformer circuit, and transmit the sampled voltage and the sampled current to a control chip (for example, a microcontroller unit (Microcontroller Unit, MCU)). When determining that a fault occurs in the system, the control chip disconnects, based on a current power supply mode of the transformer circuit, a high-frequency switching transistor corresponding to the current power supply mode (for example, disconnects the fourth switching transistor Q4 when the transformer circuit performs boost discharging), or adjusts a power supply mode of the transformer circuit (for example, adjusts the power supply mode of the transformer circuit to buck discharging).

The inventor of this application finds in research and practice that, because the system needs to transmit a sampled signal to the MCU and the MCU delivers a control signal based on a current power supply mode, a response time from occurrence of a fault to receiving of the control signal is long, and safety is low. In addition, when the power supply mode of the transformer circuit is boost discharging, if a fault occurs in the system and an actual output voltage is less than or equal to an input voltage, even if the fourth switching transistor Q4 is disconnected, because a body diode (or a built-in diode) exists in a switching transistor (for example, the third switching transistor Q3 and the fourth switching transistor Q4), the power supply and the load are still electrically connected in a short time, endangering safety of electronic elements in the system, and resulting in low safety of the system.

JIA-NA LOU ET AL, "A green-switch controller IC for cascade buck boost converter with seamless transition over entire input and load range", MICROELECTRONICS JOURNAL, MACKINTOSH PUBLICATIONS LTD. LUTON, GB, vol. 42, no. 10, doi:10.1016/J.MEJO.2011.06.003, ISSN 0026-2692, (20110614), pages 1151 - 1163, (20110705), XP028276260 discloses a 4-switch cascade buck-boost circuit that is capable of outputting noninverting step down and step up voltages.

OUCHI TAKAYUKI ET AL, "Stable startup of seamless controlled parallel bidirectional DC-DC converter", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, (20150908), doi:10.1109/EPE.2015.7309279, pages 1 - 9, XP032800234 discloses a control method for a bidirectional DC-DC converter that prevents unexpected reverse current.

US 2008/203990 A1 discloses a switching regulator that includes an inductor, a first step-down switch to store charge in the inductor, a second step-down switch to discharge the charge, a first step-up switch to store charge in the inductor, a second step-up switch to discharge the charge, a reverse current detector to detect a reverse current from an output terminal to the inductor through the second step-up switch, or an indication of the reverse current, based on a detection voltage, and a controller to control the first and second step-down switches, and the first and second step-up switches to output a predetermined constant voltage, and to shut off the second step-up switch to make shutdown condition when the detector detects the reverse current or an indication of the reverse current. The reverse current detector may have a threshold value in the step-down operation that is different from a threshold value in the step-up operation.

### SUMMARY

This application provides a voltage conversion apparatus, a base station power supply system, and a control method. When an input voltage of a transformer circuit is greater than or equal to an output voltage and a current in a power supply system is excessively large due to a fault in the power supply system, a normally-on switching transistor can be turned off in time, to cut off an electrical connection between a power supply and a load, so that safety of the system is improved, response is quick, a structure is simple, a control method is simple, applicability is high, service life of elements is prolonged, and costs are reduced.

According to a first aspect, this application provides a voltage conversion apparatus according to appended claim 1.

In this application, the transformer circuit includes the first switching transistor, the second switching transistor, the third switching transistor, the fourth switching transistor, and the inductor. The transformer circuit may switch between a plurality of power supply modes (for example, boost discharging, buck discharging, boost charging, and buck charging) according to an application scenario. In a process in which the transformer circuit uses the boost discharging mode to increase a voltage of the power supply to a voltage that matches the load to supply power to the load, the first switching transistor in the transformer circuit is used as the normally-on switching transistor, and the fourth switching transistor is used as a primary switching transistor. It may be understood that, when a fault (for example, a load terminal is short-circuited or overloaded) occurs in the power supply system and an actual output voltage of the transformer circuit is less than or equal to an input voltage of the transformer circuit, if only the fourth switching transistor used as the primary switching transistor is turned off, because a body diode (or a built-in diode) exists in a switching transistor (for example, the third switching transistor and the fourth switching transistor), the power supply and the load are still electrically connected in a short time, endangering safety of electronic elements in the system. In a process in which the transformer circuit uses the boost charging mode to increase a voltage of the load to a voltage that matches the power supply to supply power to the power supply, the third switching transistor in the transformer circuit is used as the normally-on switching transistor, and the second switching transistor is used as the primary switching transistor. In addition, it may be understood that, when a fault (for example, a power supply terminal is short-circuited or overloaded) occurs in the power supply system and the actual output voltage of the transformer circuit is less than or equal to the input voltage of the transformer circuit, if only the second switching transistor used as the primary switching transistor is turned off, because a body diode (or a built-in diode) exists in a switching transistor (for example, the first switching transistor and the second switching transistor), the power supply and the load are still electrically connected in a short time, endangering safety of electronic elements in the system.

In this application, the voltage conversion apparatus may determine a running status of the power supply system based on a magnitude relationship between the input voltage and the output voltage of the transformer circuit and a relationship between the first sampled current value and the first current reference value. When the input voltage of the transformer circuit is greater than or equal to the output voltage and the current in the power supply system is excessively large (for example, the first sampled current value is greater than or equal to the first current reference value) due to a fault in the power supply system, the voltage conversion apparatus may turn off the normally-on switching transistor in the transformer circuit, to cut off the electrical connection between the power supply and the load. The control circuit in the voltage conversion apparatus may turn off the normally-on switching transistor when the input voltage value of the transformer circuit is greater than or equal to the output voltage value of the transformer circuit, and the first sampled current value of the transformer circuit is greater than or equal to the first current reference value, to cut off the electrical connection between the load and the power supply.

According to this application, when an input voltage of a transformer circuit is greater than or equal to an output voltage and a current in a power supply system is excessively large due to a fault in the power supply system, the voltage conversion apparatus can turn off a normally-on switching transistor in time, to cut off an electrical connection between a power supply and a load, so that safety of the system is improved, response is quick, a structure is simple, a control method is simple, applicability is high, service life of elements is prolonged, and costs are reduced.

With reference to the first aspect, in a first possible implementation, the first sampled current value includes an input current value of the transformer circuit, an output current value of the transformer circuit, an input current value of the inductor, and/or an output current value of the inductor, and is applicable to different application scenarios.

In the first aspect, the control circuit is further configured to: after turning off the normally-on switching transistor, turn on the normally-on switching transistor again when the input voltage value is less than the output voltage value or the first sampled current value is less than or equal to a first current reset value. The first current reset value is less than the first current reference value. After a fault in the power supply system is cleared or when a current value in the power supply system is within a safe range (for example, the first sampled current value is less than or equal to the first current reset value), the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high. In addition, the first current reset value is less than the first current reference value, so that the control circuit can be kept from frequently controlling the normally-on switching transistor to switch from being turned on to being turned off or switch from being turned off to being turned on, so that service life of elements is prolonged.

With reference to the first aspect, in a second possible implementation, the control circuit is further configured to: after turning off the normally-on switching transistor, indicate, based on a reset signal of an external central control system, to turn on the normally-on switching transistor again. When determining that a fault in the power supply system has been cleared or to adapt to a change in impedance of the load terminal (or the power supply terminal), the external central control system adjusts the transformer circuit to a power supply mode of buck discharging (or buck charging), or when the transformer circuit operates in a power supply mode of buck discharging (or buck charging), the central control system may send a corresponding reset signal to the voltage conversion apparatus. When obtaining, receiving, or detecting the reset signal of the external central control system, the voltage conversion apparatus may turn on the normally-on switching transistor again based on an indication of the reset signal of the external central control system (or maintain the normally-on switching transistor in an on or off state based on the power supply mode of buck discharging or buck charging), and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

With reference to the second possible implementation of the first aspect, in a third possible implementation, the control circuit includes a comparison module and a logic control module, an input terminal of the comparison module is connected to an input terminal of the transformer circuit, an output terminal of the transformer circuit, and a first sampling point, and an output terminal of the comparison module is connected to the control terminal of the normally-on switching transistor by the logic control module. The first sampling point includes the input terminal of the transformer circuit, the output terminal of the transformer circuit, an output terminal of the inductor, and/or an input terminal of the inductor. The comparison module is configured to output a voltage comparison signal based on a magnitude relationship between the input voltage value of the transformer circuit and the output voltage value of the transformer circuit. The comparison module is further configured to output a first current comparison signal based on a magnitude relationship between the first sampled current value and the first current reference value. The first sampled current value is a current value at the first sampling point. The logic control module is configured to control, based on the voltage comparison signal and the first current comparison signal, on or off of the normally-on switching transistor.

In this application, the comparison module (the comparison module may include a comparison circuit or a circuit having a comparison function) may output the voltage comparison signal based on the magnitude relationship between the input voltage and the output voltage of the transformer circuit, or may output the first current comparison signal based on the magnitude relationship between the first sampled current value and the first current reference value. The logic control module (the logic control module may include a logic control circuit (for example, an AND gate circuit or a NAND gate circuit) or a circuit having a logic determining function) may control, based on the voltage comparison signal and the first current comparison signal, on or off of the normally-on switching transistor. It may be understood that the voltage conversion apparatus may determine the running status of the power supply system based on the relationship between the first sampled current value and the first current reference value. When the power supply system runs normally (for example, the input voltage of the transformer circuit is less than the output voltage), the voltage conversion apparatus may maintain the normally-on switching transistor in the transformer circuit on, to maintain the electrical connection between the power supply and the load. When the input voltage of the transformer circuit is greater than or equal to the output voltage and the current in the power supply system is excessively large due to a fault (for example, a short-circuit fault or an excessively large load) in the power supply system, the voltage conversion apparatus may turn off the normally-on switching transistor in the transformer circuit, to cut off the electrical connection between the power supply and the load. In addition, it may be understood that, after a fault in the power supply system is cleared (for example, the input voltage of the transformer circuit is less than the output voltage) or when a current value in the power supply system is within a safe range, the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

According to this application, when the power supply system runs normally (for example, the input voltage of the transformer circuit is less than the output voltage), the voltage conversion apparatus may maintain the normally-on switching transistor in the transformer circuit on, to maintain the electrical connection between the power supply and the load. When the input voltage of the transformer circuit is greater than or equal to the output voltage and the current in the power supply system is excessively large due to a fault in the power supply system, the voltage conversion apparatus can turn off the normally-on switching transistor in time, to cut off the electrical connection between the power supply and the load. After a fault in the power supply system is cleared or when a current value in the power supply system is within a safe range, the voltage conversion apparatus may also turn on the normally-on switching transistor again, and restore the electrical connection between the power supply and the load in time, to avoid a power failure of the load terminal (or the power supply terminal) caused by long-time disconnection between the power supply and the load. The voltage conversion apparatus can improve safety of the system, and ensure the stable running of the system, so that control is simple, response is quick, applicability is high, and control efficiency is high.

With reference to the third possible implementation of the first aspect, in a fourth possible implementation, the comparison module is further configured to output the first current comparison signal based on a magnitude relationship among the first sampled current value, the first current reset value, and the first current reference value. It may be understood that the comparison module may further output the first current comparison signal based on the magnitude relationship among the first sampled current value, the first current reset value, and the first current reference value. Further, the logic control module (the logic control module may include a logic control circuit (for example, an AND gate circuit or a NAND gate circuit) or a circuit having a logic determining function) may control, based on the voltage comparison signal and the first current comparison signal, on or off of the normally-on switching transistor. To be specific, after a fault in the power supply system is cleared or when a current value in the power supply system is within a safe range (for example, the first sampled current value is less than or equal to the first current reset value), the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high. In addition, the first current reset value is less than the first current reference value, so that the control circuit can be kept from frequently controlling the normally-on switching transistor to switch from being turned on to being turned off or switch from being turned off to being turned on, and service life of elements is prolonged.

With reference to the fourth possible implementation of the first aspect, in a fifth possible implementation, when the transformer circuit supplies power to the load through the power supply based on a drive signal that is of a primary switching transistor and that is inputted by the external central control system, the fourth switching transistor is the primary switching transistor, and the first switching transistor is the normally-on switching transistor. When the transformer circuit supplies power to the power supply through the load based on a drive signal that is of the primary switching transistor and that is inputted by the external central control system, the second switching transistor is the primary switching transistor, and the third switching transistor is the normally-on switching transistor. It may be understood that the transformer circuit may switch between a plurality of power supply modes (for example, boost discharging, buck discharging, boost charging, and buck charging) according to an application scenario. The external central control system may provide different drive signals for the switching transistors of the transformer circuit directly or by using a drive circuit, to control the transformer circuit to be in different power supply modes. For example, when the external central control system uses the fourth switching transistor as the primary switching transistor and inputs a drive signal of the corresponding primary switching transistor, the transformer circuit is in the boost discharging mode, and supplies power to the load through the power supply. In this case, the first switching transistor is used as the normally-on switching transistor. In another example, when the external central control system uses the second switching transistor as the primary switching transistor and inputs a drive signal of the corresponding primary switching transistor, the transformer circuit is in the boost charging mode, and supplies power to the power supply through the load. In this case, the third switching transistor is used as the normally-on switching transistor. The voltage conversion apparatus may determine the power supply mode of the transformer circuit based on the drive signal that is of the primary switching transistor and that is inputted by the external central control system, so that when the transformer circuit is in a different power supply mode, on or off of the normally-on switching transistor in the current power supply mode is controlled, so that control is simple, response is quick, and applicability is strong.

With reference to the fifth possible implementation of the first aspect, in a sixth possible implementation, the input terminal of the comparison module may be connected to the input terminal of the transformer circuit, the output terminal of the transformer circuit, the first sampling point, and a second sampling point. The second sampling point includes the input terminal of the transformer circuit, the output terminal of the transformer circuit, an output terminal of the inductor, and/or an input terminal of the inductor. The comparison module is further configured to output a second current comparison signal based on a magnitude relationship between a second sampled current value and a second current reference value. The second sampled current value is a current value at the second sampling point. It may be understood that in a process in which the transformer circuit uses the boost discharging mode to increase a voltage of the power supply to a voltage that matches the load to supply power to the load, the first switching transistor in the transformer circuit is used as the normally-on switching transistor, and the fourth switching transistor is used as a primary switching transistor. In a process in which the transformer circuit uses the boost charging mode to increase a voltage of the load to a voltage that matches the power supply to supply power to the power supply, the third switching transistor in the transformer circuit is used as the normally-on switching transistor, and the second switching transistor is used as the primary switching transistor. In a scenario in which the power supply mode of the transformer circuit is switched frequently or another application scenario, the comparison module may output the first current comparison signal based on the magnitude relationship between the first sampled current value and the first current reference value, and may output the second current comparison signal based on the magnitude relationship between the second sampled current value and the second current reference value. The first sampled current value may be a current value at the first sampling point that is set for the first switching transistor as the normally-on switching transistor, and the second sampled current value may be a current value at the second sampling point that is set for the third switching transistor as the normally-on switching transistor. Alternatively, the first sampled current value may be a current value at the first sampling point that is set for the third switching transistor as the normally-on switching transistor, and the second sampled current value may be a current value at the second sampling point that is set for the first switching transistor as the normally-on switching transistor, which may be specifically determined according to an application scenario. To be specific, when the transformer circuit is in a power supply mode (for example, the boost discharging mode or the boost charging mode), if a fault (for example, the load terminal is short-circuited or overloaded, or the power supply terminal is short-circuited or overloaded) occurs in the power supply system, the actual output voltage of the transformer circuit is less than or equal to the input voltage of the transformer circuit, and the current in the power supply system is excessively large (for example, the first sampled current value is greater than or equal to the first current reference value, or the second sampled current value is greater than or equal to the second current reference value), the voltage conversion apparatus may turn off the normally-on switching transistor (for example, the first switching transistor or the third switching transistor) in the transformer circuit, to cut off the electrical connection between the power supply and the load.

According to this application, the voltage conversion apparatus may determine the running status of the power supply system based on the magnitude relationship between the input voltage and the output voltage of the transformer circuit, the relationship between the first sampled current value and the first current reference value, and the relationship between the second sampled current value and the second current reference value. When the transformer circuit uses different power supply modes, if the input voltage of the transformer circuit is greater than or equal to the output voltage and the current in the power supply system is excessively large due to a fault in the power supply system, the voltage conversion apparatus may turn off the normally-on switching transistor in the transformer circuit in the current power supply mode, to cut off the electrical connection between the power supply and the load, so that safety of the system is improved, response is quick, a structure is simple, a control method is simple, applicability is high, service life of components is prolonged, and costs are reduced.

With reference to the sixth possible implementation of the first aspect, in a seventh possible implementation, the comparison module is further configured to output the second current comparison signal based on a magnitude relationship among the second sampled current value, a second current reset value, and the second current reference value. The second current reset value is less than the second current reference value. It may be understood that, in a scenario in which the power supply mode of the transformer circuit is switched frequently or another application scenario, the comparison module may output the first current comparison signal based on the magnitude relationship among the first sampled current value, the first current reference value, and the first current reset value, and may output the second current comparison signal based on the magnitude relationship among the second sampled current value, the second current reference value, and the second current reset value. The first sampled current value may be a current value at the first sampling point that is set for the first switching transistor as the normally-on switching transistor, and the second sampled current value may be a current value at the second sampling point that is set for the third switching transistor as the normally-on switching transistor. Alternatively, the first sampled current value may be a current value at the first sampling point that is set for the third switching transistor as the normally-on switching transistor, and the second sampled current value may be a current value at the second sampling point that is set for the first switching transistor as the normally-on switching transistor, which may be specifically determined according to an application scenario. To be specific, when the transformer circuit is in a power supply mode (for example, the boost discharging mode or the boost charging mode), if a fault in the power supply system has been cleared or a current value in the power supply system is within a safe range (for example, the first sampled current value is less than or equal to the first current reset value, or the second sampled current value is less than or equal to the second current reset value), the voltage conversion apparatus may turn on the normally-on switching transistor (for example, the first switching transistor or the third switching transistor) in the transformer circuit again, and restore the electrical connection between the power supply and the load in time, to avoid a power failure of the load terminal (or the power supply terminal) due to long-time disconnection between the power supply and the load, and ensure stable running of the system, so that control is easy, response is quick, applicability is high, and control efficiency is high. In addition, the second current reset value is less than the second current reference value, so that the control circuit can be kept from frequently controlling the normally-on switching transistor to switch from being turned on to being turned off or switch from being turned off to being turned on, and service life of elements is prolonged.

With reference to the seventh possible implementation of the first aspect, in an eighth possible implementation, the logic control module includes a latch reset unit and a drive control unit. The output terminal of the comparison module may be connected to the drive control unit by the latch reset unit. The latch reset unit is configured to output a target enable control signal based on the voltage comparison signal and a target current comparison signal. The target current comparison signal and the target enable control signal are respectively the first current comparison signal and a first enable control signal, or are respectively the second current comparison signal and a second enable control signal. The drive control unit is configured to control, based on the target enable control signal and a drive signal that is of a target normally-on switching transistor and that is inputted by the external central control system, on or off of the target normally-on switching transistor. The target enable control signal and the target normally-on switching transistor are respectively the first enable control signal and a first switching transistor, or are respectively the second enable control signal and a third switching transistor. It may be understood that the voltage conversion apparatus may determine the running status of the power supply system based on the voltage comparison signal and the target current comparison signal (for example, the magnitude relationship among the first sampled current value, the first current reference value, and the first current reset value, or the magnitude relationship among the second sampled current value, the second current reference value, and the second current reset value). When the power supply system runs normally (for example, the input voltage of the transformer circuit is less than the output voltage), the voltage conversion apparatus may output the target enable control signal (for example, the first enable control signal or the second enable control signal), to maintain the normally-on switching transistor (for example, the first switching transistor or the third switching transistor) in the transformer circuit on, to maintain the electrical connection between the power supply and the load. When a fault (for example, a short-circuit fault or an excessively large load) occurs in the power supply system, the input voltage of the transformer circuit is less than or equal to the output voltage, and a current in the power supply system is excessively large (for example, the first sampled current value is greater than or equal to the first current reference value, or the second sampled current value is greater than or equal to the second current reference value), the voltage conversion apparatus may output the target enable control signal (for example, the first enable control signal or the second enable control signal), and turn off the normally-on switching transistor (for example, the first switching transistor or the third switching transistor) in the transformer circuit, to cut off the electrical connection between the power supply and the load. In addition, it may be understood that after a fault in the power supply system is cleared (for example, the input voltage of the transformer circuit is less than the output voltage) or when a current value in the power supply system is within a safe range (for example, the first sampled current value is less than or equal to the first current reset value, or the second sampled current value is less than or equal to the second current reset value), the voltage conversion apparatus may output the target enable control signal (for example, the first enable control signal or the second enable control signal), turn on the normally-on switching transistor again, and restore the electrical connection between the power supply and the load in time, to avoid a power failure of the load terminal (or the power supply terminal) due to long-time disconnection between the power supply and the load, and ensure stable running of the system, so that control is easy, response is quick, applicability is high, and control efficiency is high.

With reference to the eighth possible implementation of the first aspect, in a ninth possible implementation, the latch reset unit is further configured to output the target enable control signal based on the voltage comparison signal, the target current comparison signal, and the reset signal of the external central control system. It may be understood that, when determining that a fault in the power supply system has been cleared or to adapt to a change in impedance of the load terminal (or the power supply terminal), the external central control system adjusts the transformer circuit to a power supply mode of buck discharging (or buck charging), or when the transformer circuit operates in a power supply mode of buck discharging (or buck charging), the central control system may send a corresponding reset signal to the voltage conversion apparatus. When obtaining, receiving, or detecting the reset signal of the external central control system, the latch reset unit may output the target enable control signal based on the voltage comparison signal, the target current comparison signal, and the reset signal of the external central control system, turn on the normally-on switching transistor again (or maintain the normally-on switching transistor in an on or off state based on the power supply mode of buck discharging or buck charging), and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

According to a second aspect, this application provides a base station power supply system according to appended claim 11.

According to this application, when an input voltage of a transformer circuit is greater than or equal to an output voltage and a current in a power supply system is excessively large due to a fault in the power supply system, the voltage conversion apparatus can turn off a normally-on switching transistor in time, to cut off an electrical connection between a power supply and a base station, so that safety of the system is improved, response is quick, a structure is simple, a control method is simple, applicability is high, service life of elements is prolonged, and costs are reduced.

With reference to the second aspect, in a first possible implementation, the base station power supply system may include a plurality of voltage conversion apparatuses, the transformer circuits in the plurality of voltage conversion apparatuses one-to-one correspond to the control circuits in the plurality of voltage conversion apparatuses, and the power supply is connected in parallel to the transformer circuits in the plurality of voltage conversion apparatuses and then connected to the base station.

According to this application, when an input voltage of a transformer circuit in a voltage conversion apparatus in the plurality of voltage conversion apparatuses is greater than or equal to the output voltage and a current in the power supply system is excessively large due to a fault in the power supply system, the voltage conversion apparatus may turn off the normally-on switching transistor in time, to cut off an electrical connection between a power supply of the voltage conversion apparatus and a load, so that while application scenarios are enriched, safety of the system can be improved, service life of elements can be prolonged, and costs can be reduced.

According to a third aspect, this application provides a control method of a voltage conversion apparatus according to appended claim 13. The control method is applicable to the voltage conversion apparatus according to any one of the first aspect or the possible implementations of the first aspect.

In this application, the voltage conversion apparatus may determine a running status of the power supply system based on a magnitude relationship between the input voltage and the output voltage of the transformer circuit and a relationship between the first sampled current value and the first current reference value. When the input voltage of the transformer circuit is greater than or equal to the output voltage and the current in the power supply system is excessively large (for example, the first sampled current value is greater than or equal to the first current reference value) due to a fault in the power supply system, the voltage conversion apparatus may turn off the normally-on switching transistor in the transformer circuit, to cut off the electrical connection between the power supply and the load. The control circuit in the voltage conversion apparatus may turn off the normally-on switching transistor when the input voltage value of the transformer circuit is greater than or equal to the output voltage value of the transformer circuit, and the first sampled current value of the transformer circuit is greater than or equal to the first current reference value, to cut off the electrical connection between the load and the power supply. The first sampled current value may include an input current value of the transformer circuit, an output current value of the transformer circuit, an input current value of the inductor, and/or an output current value of the inductor.

According to this application, when an input voltage of a transformer circuit is greater than or equal to an output voltage and a current in a power supply system is excessively large due to a fault in the power supply system, the voltage conversion apparatus can turn off a normally-on switching transistor in time, to cut off an electrical connection between a power supply and a load, so that safety of the system is improved, response is quick, a structure is simple, a control method is simple, applicability is high, service life of elements is prolonged, and costs are reduced.

In the third aspect, after the turning off the normally-on switching transistors, the method further includes: turning on the normally-on switching transistors again when the input voltage value is less than the output voltage value or the first sampled current value is less than or equal to a first current reset value. The first current reset value is less than the first current reference value. After a fault in the power supply system is cleared or when a current value in the power supply system is within a safe range (for example, the first sampled current value is less than or equal to the first current reset value), the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

With reference to the third aspect, in a first possible implementation, after the turning off the normally-on switching transistors, the method further includes: indicating, based on a reset signal of an external central control system, to turn on the normally-on switching transistors again. When determining that a fault in the power supply system has been cleared or to adapt to a change in impedance of the load terminal (or the power supply terminal), the external central control system adjusts the transformer circuit to a power supply mode of buck discharging (or buck charging), or when the transformer circuit operates in a power supply mode of buck discharging (or buck charging), the central control system may send a corresponding reset signal to the voltage conversion apparatus. When obtaining, receiving, or detecting the reset signal of the external central control system, the voltage conversion apparatus may turn on the normally-on switching transistor again based on an indication of the reset signal of the external central control system (or maintain the normally-on switching transistor in an on or off state based on the power supply mode of buck discharging or buck charging), and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

With reference to the first possible implementation of the third aspect, in a second possible implementation, after the detecting an input voltage value of the transformer circuit, an output voltage value of the transformer circuit, and a first sampled current value, the method further includes: outputting a voltage comparison signal based on a magnitude relationship between the input voltage value of the transformer circuit and the output voltage value of the transformer circuit; outputting a first current comparison signal based on a magnitude relationship between the first sampled current value and the first current reference value, where the first sampled current value is a current value at the first sampling point; and controlling, based on the voltage comparison signal and the first current comparison signal, on or off of the normally-on switching transistors.

In this application, the comparison module (the comparison module may include a comparison circuit or a circuit having a comparison function) may output the voltage comparison signal based on the magnitude relationship between the input voltage and the output voltage of the transformer circuit, or may output the first current comparison signal based on the magnitude relationship between the first sampled current value and the first current reference value. The logic control module (the logic control module may include a logic control circuit (for example, an AND gate circuit or a NAND gate circuit) or a circuit having a logic determining function) may control, based on the voltage comparison signal and the first current comparison signal, on or off of the normally-on switching transistor. It may be understood that the voltage conversion apparatus may determine the running status of the power supply system based on the relationship between the first sampled current value and the first current reference value. When the power supply system runs normally (for example, the input voltage of the transformer circuit is less than the output voltage), the voltage conversion apparatus may maintain the normally-on switching transistor in the transformer circuit on, to maintain the electrical connection between the power supply and the load. When the input voltage of the transformer circuit is greater than or equal to the output voltage and the current in the power supply system is excessively large due to a fault (for example, a short-circuit fault or an excessively large load) in the power supply system, the voltage conversion apparatus may turn off the normally-on switching transistor in the transformer circuit, to cut off the electrical connection between the power supply and the load. In addition, it may be understood that, after a fault in the power supply system is cleared (for example, the input voltage of the transformer circuit is less than the output voltage) or when a current value in the power supply system is within a safe range, the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

According to this application, when the power supply system runs normally (for example, the input voltage of the transformer circuit is less than the output voltage), the voltage conversion apparatus may maintain the normally-on switching transistor in the transformer circuit on, to maintain the electrical connection between the power supply and the load. When the input voltage of the transformer circuit is greater than or equal to the output voltage and the current in the power supply system is excessively large due to a fault in the power supply system, the voltage conversion apparatus can turn off the normally-on switching transistor in time, to cut off the electrical connection between the power supply and the load. After a fault in the power supply system is cleared or when a current value in the power supply system is within a safe range, the voltage conversion apparatus may also turn on the normally-on switching transistor again, and restore the electrical connection between the power supply and the load in time, to avoid a power failure of the load terminal (or the power supply terminal) caused by long-time disconnection between the power supply and the load. The voltage conversion apparatus can improve safety of the system, and ensure the stable running of the system, so that control is simple, response is quick, applicability is high, and control efficiency is high.

With reference to the second possible implementation of the third aspect, in a third possible implementation, the outputting a first current comparison signal based on a magnitude relationship between the first sampled current value and the first current reference value includes: outputting the first current comparison signal based on a magnitude relationship among the first sampled current value, the first current reset value, and the first current reference value. It may be understood that the comparison module may further output the first current comparison signal based on the magnitude relationship among the first sampled current value, the first current reset value, and the first current reference value. Further, the logic control module (the logic control module may include a logic control circuit (for example, an AND gate circuit or a NAND gate circuit) or a circuit having a logic determining function) may control, based on the voltage comparison signal and the first current comparison signal, on or off of the normally-on switching transistor. To be specific, after a fault in the power supply system is cleared or when a current value in the power supply system is within a safe range (for example, the first sampled current value is less than or equal to the first current reset value), the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high. In addition, the first current reset value is less than the first current reference value, so that the control circuit can be kept from frequently controlling the normally-on switching transistor to switch from being turned on to being turned off or switch from being turned off to being turned on, and service life of elements is prolonged.

With reference to the third possible implementation of the third aspect, in a fourth possible implementation, after the detecting an input voltage value of the transformer circuit, an output voltage value of the transformer circuit, and a first sampled current value, the method further includes: detecting a second sampled current value, where the second sampled current value includes an input current value of the transformer circuit, an output current value of the transformer circuit, input current values of the inductors, and/or output current values of the inductors; and outputting a second current comparison signal based on a magnitude relationship between a second sampled current value and a second current reference value. The second sampled current value is a current value at the second sampling point. It may be understood that in a process in which the transformer circuit uses the boost discharging mode to increase a voltage of the power supply to a voltage that matches the load to supply power to the load, the first switching transistor in the transformer circuit is used as the normally-on switching transistor, and the fourth switching transistor is used as a primary switching transistor. In a process in which the transformer circuit uses the boost charging mode to increase a voltage of the load to a voltage that matches the power supply to supply power to the power supply, the third switching transistor in the transformer circuit is used as the normally-on switching transistor, and the second switching transistor is used as the primary switching transistor. In a scenario in which the power supply mode of the transformer circuit is switched frequently or another application scenario, the comparison module may output the first current comparison signal based on the magnitude relationship between the first sampled current value and the first current reference value, and may output the second current comparison signal based on the magnitude relationship between the second sampled current value and the second current reference value. The first sampled current value may be a current value at the first sampling point that is set for the first switching transistor as the normally-on switching transistor, and the second sampled current value may be a current value at the second sampling point that is set for the third switching transistor as the normally-on switching transistor. Alternatively, the first sampled current value may be a current value at the first sampling point that is set for the third switching transistor as the normally-on switching transistor, and the second sampled current value may be a current value at the second sampling point that is set for the first switching transistor as the normally-on switching transistor, which may be specifically determined according to an application scenario. To be specific, when the transformer circuit is in a power supply mode (for example, the boost discharging mode or the boost charging mode), if a fault (for example, the load terminal is short-circuited or overloaded, or the power supply terminal is short-circuited or overloaded) occurs in the power supply system, the actual output voltage of the transformer circuit is less than or equal to the input voltage of the transformer circuit, and the current in the power supply system is excessively large (for example, the first sampled current value is greater than or equal to the first current reference value, or the second sampled current value is greater than or equal to the second current reference value), the voltage conversion apparatus may turn off the normally-on switching transistor (for example, the first switching transistor or the third switching transistor) in the transformer circuit, to cut off the electrical connection between the power supply and the load.

According to this application, the voltage conversion apparatus may determine the running status of the power supply system based on the magnitude relationship between the input voltage and the output voltage of the transformer circuit, the relationship between the first sampled current value and the first current reference value, and the relationship between the second sampled current value and the second current reference value. When the transformer circuit uses different power supply modes, if the input voltage of the transformer circuit is greater than or equal to the output voltage and the current in the power supply system is excessively large due to a fault in the power supply system, the voltage conversion apparatus may turn off the normally-on switching transistor in the transformer circuit in the current power supply mode, to cut off the electrical connection between the power supply and the load, so that safety of the system is improved, response is quick, a structure is simple, a control method is simple, applicability is high, service life of components is prolonged, and costs are reduced.

With reference to the fourth possible implementation of the third aspect, in a fifth possible implementation, the outputting the second current comparison signal based on the magnitude relationship between the second sampled current value and the second current reference value includes: outputting the second current comparison signal based on a magnitude relationship among the second sampled current value, a second current reset value, and the second current reference value. The second current reset value is less than the second current reference value. It may be understood that, in a scenario in which the power supply mode of the transformer circuit is switched frequently or another application scenario, the comparison module may output the first current comparison signal based on the magnitude relationship among the first sampled current value, the first current reference value, and the first current reset value, and may output the second current comparison signal based on the magnitude relationship among the second sampled current value, the second current reference value, and the second current reset value. The first sampled current value may be a current value at the first sampling point that is set for the first switching transistor as the normally-on switching transistor, and the second sampled current value may be a current value at the second sampling point that is set for the third switching transistor as the normally-on switching transistor. Alternatively, the first sampled current value may be a current value at the first sampling point that is set for the third switching transistor as the normally-on switching transistor, and the second sampled current value may be a current value at the second sampling point that is set for the first switching transistor as the normally-on switching transistor, which may be specifically determined according to an application scenario. To be specific, when the transformer circuit is in a power supply mode (for example, the boost discharging mode or the boost charging mode), if a fault in the power supply system has been cleared or a current value in the power supply system is within a safe range (for example, the first sampled current value is less than or equal to the first current reset value, or the second sampled current value is less than or equal to the second current reset value), the voltage conversion apparatus may turn on the normally-on switching transistor (for example, the first switching transistor or the third switching transistor) in the transformer circuit again, and restore the electrical connection between the power supply and the load in time, to avoid a power failure of the load terminal (or the power supply terminal) due to long-time disconnection between the power supply and the load, and ensure stable running of the system, so that control is easy, response is quick, applicability is high, and control efficiency is high. In addition, the first current reset value is less than the first current reference value, and the second current reset value is less than the second current reference value, so that the control circuit can be kept from frequently controlling the normally-on switching transistor to switch from being turned on to being turned off or switch from being turned off to being turned on, and service life of elements is prolonged.

With reference to the fifth possible implementation of the third aspect, in a sixth possible implementation, after the detecting an input voltage value of the transformer circuit, an output voltage value of the transformer circuit, and a first sampled current value, the method further includes: outputting a target enable control signal based on the voltage comparison signal and a target current comparison signal, where the target current comparison signal and the target enable control signal are respectively the first current comparison signal and a first enable control signal, or are respectively the second current comparison signal and a second enable control signal; and controlling, based on the target enable control signal and a drive signal that is of a target normally-on switching transistor and that is inputted by the external central control system, on or off of the target normally-on switching transistor. The target enable control signal and the target normally-on switching transistor are respectively the first enable control signal and a first switching transistor, or are respectively the second enable control signal and a third switching transistor. It may be understood that the voltage conversion apparatus may determine the running status of the power supply system based on the voltage comparison signal and the target current comparison signal (for example, the magnitude relationship among the first sampled current value, the first current reference value, and the first current reset value, or the magnitude relationship among the second sampled current value, the second current reference value, and the second current reset value). When the power supply system runs normally (for example, the input voltage of the transformer circuit is less than the output voltage), the voltage conversion apparatus may output the target enable control signal (for example, the first enable control signal or the second enable control signal), to maintain the normally-on switching transistor (for example, the first switching transistor or the third switching transistor) in the transformer circuit on, to maintain the electrical connection between the power supply and the load. When a fault (for example, a short-circuit fault or an excessively large load) occurs in the power supply system, the input voltage of the transformer circuit is greater than or equal to the output voltage, and a current in the power supply system is excessively large (for example, the first sampled current value is greater than or equal to the first current reference value, or the second sampled current value is greater than or equal to the second current reference value), the voltage conversion apparatus may output the target enable control signal (for example, the first enable control signal or the second enable control signal), and turn off the normally-on switching transistor (for example, the first switching transistor or the third switching transistor) in the transformer circuit, to cut off the electrical connection between the power supply and the load. In addition, it may be understood that after a fault in the power supply system is cleared (for example, the input voltage of the transformer circuit is less than the output voltage) or when a current value in the power supply system is within a safe range (for example, the first sampled current value is less than or equal to the first current reset value, or the second sampled current value is less than or equal to the second current reset value), the voltage conversion apparatus may output the target enable control signal (for example, the first enable control signal or the second enable control signal), turn on the normally-on switching transistor again, and restore the electrical connection between the power supply and the load in time, to avoid a power failure of the load terminal (or the power supply terminal) due to long-time disconnection between the power supply and the load, and ensure stable running of the system, so that control is easy, response is quick, applicability is high, and control efficiency is high. In addition, the first current reset value is less than the first current reference value, and the second current reset value is less than the second current reference value, so that the control circuit can be kept from frequently controlling the normally-on switching transistor to switch from being turned on to being turned off or switch from being turned off to being turned on, and service life of elements is prolonged.

With reference to the sixth possible implementation of the third aspect, in a seventh possible implementation, the outputting a target enable control signal based on the voltage comparison signal and a target current comparison signal includes: outputting the target enable control signal based on the voltage comparison signal, the target current comparison signal, and the reset signal of the external central control system. It may be understood that, when determining that a fault in the power supply system has been cleared or to adapt to a change in impedance of the load terminal (or the power supply terminal), the external central control system adjusts the transformer circuit to a power supply mode of buck discharging (or buck charging), or when the transformer circuit operates in a power supply mode of buck discharging (or buck charging), the central control system may send a corresponding reset signal to the voltage conversion apparatus. When obtaining, receiving, or detecting the reset signal of the external central control system, the latch reset unit may output the target enable control signal based on the voltage comparison signal, the target current comparison signal, and the reset signal of the external central control system, turn on the normally-on switching transistor again (or maintain the normally-on switching transistor in an on or off state based on the power supply mode of buck discharging or buck charging), and restore the electrical connection between the power supply and the load in time, to avoid a power failure of the load terminal (or the power supply terminal) caused by long-time disconnection between the power supply and the load, and ensure stable running of the system, so that control is simple, response is quick, and applicability is high.

### BRIEF DESCRIPTION OF DRAWINGS

FIG. 1 is a schematic diagram of a structure of an H-bridge transformer circuit not forming part of the invention;
FIG. 2 is a schematic diagram of an application scenario of a voltage conversion apparatus according to an embodiment of this application;
FIG. 3 is a schematic diagram of a structure of a voltage conversion apparatus according to an embodiment of this application;
FIG. 4 is a schematic diagram of control logic of a voltage conversion apparatus according to an embodiment of this application;
FIG. 5 is a schematic diagram of a structure of a control circuit according to an embodiment of this application;
FIG. 6 is a schematic diagram of other control logic of a voltage conversion apparatus according to an embodiment of this application;
FIG. 7 is another schematic diagram of a structure of a voltage conversion apparatus according to an embodiment of this application;
FIG. 8 is another schematic diagram of a structure of a voltage conversion apparatus according to an embodiment of this application;
FIG. 9 is a schematic diagram of a structure of a base station power supply system according to an embodiment of this application; and
FIG. 10 is a schematic flowchart of a control method according to an embodiment of this application.

### DESCRIPTION OF EMBODIMENTS

A voltage conversion apparatus provided in this application is applicable to various application fields such as the field of new energy power generation, the field of peak modulation and frequency modulation in conventional power generation, the field of power supply for important equipment, and the field of new energy vehicles. This may be specifically determined according to an actual application scenario, and is not limited herein. The voltage conversion apparatus provided in this application is applicable to different power supply systems such as an energy storage system, an uninterruptible power supply system, and a motor drive system. This may be specifically determined according to an actual application scenario, and is not limited herein. The voltage conversion apparatus provided in this application may be adapted to different application scenarios, for example, an application scenario of controlling a transformer circuit in a light energy power supply environment, an application scenario of controlling a transformer circuit in a wind energy power supply environment, an application scenario of controlling a transformer circuit in a pure energy storage power supply environment, or another application scenario. An application scenario of controlling a transformer circuit in a pure energy storage power supply environment is used as an example for description below, and details are not described below again.

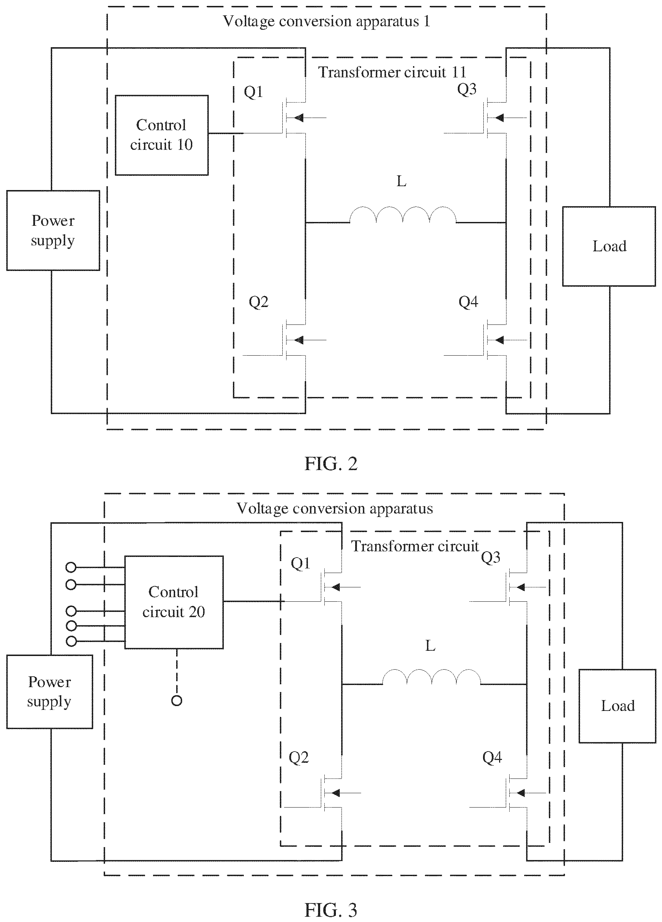

FIG. 2 is a schematic diagram of an application scenario of a voltage conversion apparatus according to an embodiment of this application. In a power supply system powered by pure energy storage, as shown in FIG. 2, the power supply system includes a voltage conversion apparatus 1, a power supply, and a load. The voltage conversion apparatus 1 includes a transformer circuit 11, and the power supply may be connected to the load by the transformer circuit 11. In some feasible implementations, the power supply may supply power to the load through the transformer circuit 11. In some feasible implementations, the load may supply power to the power supply through the transformer circuit 11. It may be understood that, the power supply provided in this application is applicable to an application scenario of supplying power to a base station device in a remote area with no mains supply or a poor mains supply, or an application scenario of supplying power to various types of electric devices such as a home device (for example, a refrigerator or an air conditioner). This may be specifically determined according to an actual application scenario, and is not limited herein. Further, it may be understood that the load in FIG. 2 may include a power grid, and the power grid may include an electric device or an electric transmission device, for example, a transmission line, an electric transfer station, a communication base station, or a home device. The transformer circuit 11 may be an H-bridge transformer circuit. As shown in FIG. 1, the transformer circuit 11 includes an inductor L and four switching transistors (for example, a first switching transistor Q1, a second switching transistor Q2, a third switching transistor Q3, and a fourth switching transistor Q4). The first switching transistor Q1 and the second switching transistor Q2 are connected in series to a first bridge arm midpoint. The third switching transistor Q3 and the fourth switching transistor Q4 are connected in series to a second bridge arm midpoint. The inductor L is connected to the two bridge arm midpoints. The transformer circuit 11 may switch between a plurality of power supply modes (for example, boost discharging, buck discharging, boost charging, and buck charging) according to an application scenario. In a process in which the transformer circuit uses the boost discharging mode to increase a voltage of the power supply to a voltage that matches the load to supply power to the load, the first switching transistor Q1 in the transformer circuit is used as the normally-on switching transistor, and the fourth switching transistor Q4 is used as a primary switching transistor. It may be understood that, when a fault (for example, a load terminal is short-circuited or overloaded) occurs in the power supply system and an actual output voltage of the transformer circuit is less than or equal to an input voltage of the transformer circuit, if only the fourth switching transistor Q4 used as the primary switching transistor is turned off, because a body diode (or a built-in diode) exists in a switching transistor (for example, the third switching transistor Q3 and the fourth switching transistor Q4), the power supply and the load are still electrically connected in a short time, endangering safety of electronic elements in the system. In a process in which the transformer circuit uses the boost charging mode to increase a voltage of the load to a voltage that matches the power supply to supply power to the power supply, the third switching transistor Q3 in the transformer circuit is used as the normally-on switching transistor, and the second switching transistor Q2 is used as the primary switching transistor. In addition, it may be understood that, when a fault (for example, a power supply terminal is short-circuited or overloaded) occurs in the power supply system and the actual output voltage of the transformer circuit is less than or equal to the input voltage of the transformer circuit, if only the second switching transistor Q2 used as the primary switching transistor is turned off, because a body diode (or a built-in diode) exists in a switching transistor (for example, the first switching transistor Q1 and the second switching transistor Q2), the power supply and the load are still electrically connected in a short time, endangering safety of electronic elements in the system.

The voltage conversion apparatus 1 further includes a control circuit 10, and the control circuit 10 is connected to a control terminal of the normally-on switching transistor of the transformer circuit. The control circuit 10 determines a running status of the power supply system based on a magnitude relationship between the input voltage and the output voltage of the transformer circuit 11 and a relationship between the first sampled current value and the first current reference value. The first sampled current value may include an input current value of the transformer circuit 11, an output current value of the transformer circuit 11, an input current value of the inductor L, and/or an output current value of the inductor L. When the input voltage of the transformer circuit 11 is greater than or equal to the output voltage and the current in the power supply system is excessively large (for example, the first sampled current value is greater than or equal to the first current reference value) due to a fault in the power supply system, the control circuit 10 may turn off the normally -on switching transistor in the transformer circuit, to cut off the electrical connection between the power supply and the load.

According to this application, when an input voltage of a transformer circuit is greater than or equal to an output voltage and a current in a power supply system is excessively large due to a fault in the power supply system, the voltage conversion apparatus can turn off a normally-on switching transistor in time, to cut off an electrical connection between a power supply and a load, so that safety of the system is improved, response is quick, a structure is simple, a control method is simple, applicability is high, service life of elements is prolonged, and costs are reduced.

A voltage conversion apparatus provided in this application and an operating principle thereof are described below with reference to FIG. 3 to FIG. 10.

FIG. 3 is a schematic diagram of a structure of a voltage conversion apparatus according to an embodiment of this application. As shown in FIG. 3, the voltage conversion apparatus includes a control circuit 20 and a transformer circuit. Two ends of the transformer circuit are respectively connected to a power supply and a load. The control circuit 20 is connected to a control terminal of a normally-on switching transistor of the transformer circuit. The normally-on switching transistor is a first switching transistor Q1 or a third switching transistor Q3. For ease of description, in this figure, only an example in which the normally-on switching transistor is the first switching transistor Q1 is used for description. The control circuit 20 is further configured to: after turning off the normally-on switching transistor, turn on the normally-on switching transistor again when an input voltage value is less than an output voltage value or a first sampled current value is less than or equal to a first current reset value. The first current reset value is less than a first current reference value. The first current reset value and the first current reference value may be obtained through calculation by an external central control system and sent to the control circuit 20, or may be values obtained through calculation by the control circuit 20, or may be values stored in the control circuit 20. For ease of description, five input ports are shown on the left of the control circuit 20 in FIG. 3, and are respectively used to indicate that the control circuit 20 may obtain (for example, in a manner of obtaining, collecting, receiving, detecting, storing, or the like) the input voltage value of the transformer circuit, the output voltage value of the transformer circuit, the first sampled current value, the first current reference value, and the first current reset value. The input ports are merely used to more intuitively indicate that corresponding signals (or parameters) may be obtained by the control circuit 20. During actual application, signals (or parameters) transmitted by these ports may exist in other representation forms (for example, stored in the control circuit 20). These cases also fall within the protection scope of this application. The input ports shown in all the following accompanying drawings in this specification are intended to more intuitively indicate that a control circuit (or another module) may obtain a plurality of signals (or parameters). During actual application, the signals (or parameters) transmitted by these ports may exist in other representation forms (for example, stored in a control circuit or a corresponding module). These cases also fall within the protection scope of this application. Details are not described below again. After a fault in the power supply system is rectified or when a current value in the power supply system is within a safe range (for example, the first sampled current value is less than or equal to the first current reset value), the control circuit 20 may turn on the normally-on switching transistor (for example, the first switching transistor Q1) again, and restore an electrical connection between the power supply and the load in time, to avoid a power failure of a load terminal (or a power supply terminal) caused by long-time disconnection between the power supply and the load, and ensure stable running of the system. In this way, control is simple, response is quick, applicability is high, and control efficiency is high. In addition, the first current reset value is less than the first current reference value, so that the control circuit can be kept from frequently controlling the normally-on switching transistor to switch from being turned on to being turned off or switch from being turned off to being turned on, and service life of the elements is prolonged.

In some feasible implementations, further refer to FIG. 3. An example of an input port (as shown by a dashed line in FIG. 3) is drawn below the control circuit 20 in FIG. 3. The control circuit 20 may obtain (for example, in a manner of obtaining, collecting, receiving, detecting, storing, or the like) the reset signal of the external central control system. The control circuit 20 is further configured to: after turning off the normally-on switching transistor, indicate, based on a reset signal of an external central control system, to turn on the normally-on switching transistor (for example, the first switching transistor Q1) again. When determining that a fault in the power supply system has been cleared or to adapt to a change in impedance of the load terminal (or the power supply terminal), the external central control system adjusts the transformer circuit to a power supply mode of buck discharging (or buck charging), or when the transformer circuit operates in a power supply mode of buck discharging (or buck charging), the central control system may send a corresponding reset signal to the voltage conversion apparatus. When obtaining, receiving, or detecting the reset signal of the external central control system, the voltage conversion apparatus may turn on the normally-on switching transistor again based on an indication of the reset signal of the external central control system (or maintain the normally-on switching transistor in an on or off state based on the power supply mode of buck discharging or buck charging), and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

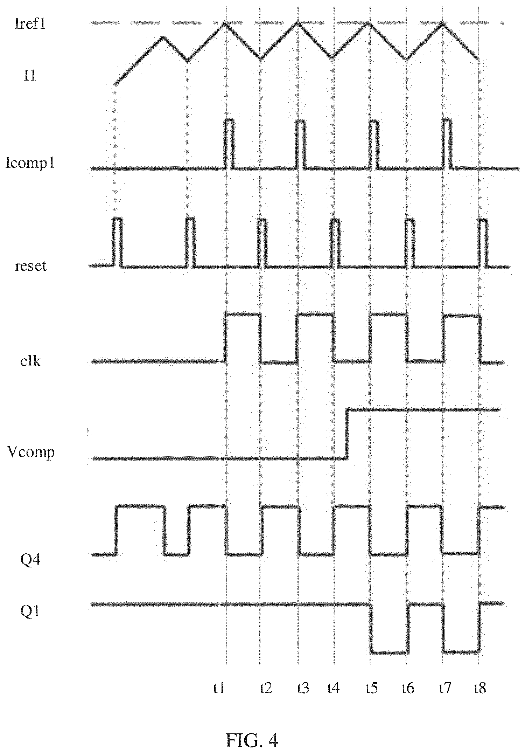

To describe control logic of a control circuit more intuitively, FIG. 4 is a schematic diagram of control logic of a voltage conversion apparatus according to an embodiment of this application. For ease of description, in FIG. 4, only a case in which a transformer circuit performs boost discharging and supplies power to a load through a power supply is described, to be specific, the fourth switching transistor Q4 is the primary switching transistor, and the first switching transistor Q1 is the normally-on switching transistor. As shown in FIG. 4, a comparison result between a first sampled current value I1 and a first current reference value Iref1 is Icomp1. When the first sampled current value I1 is greater than or equal to the first current reference value Iref1, Icomp1 is at a high level. When the first sampled current value I1 is less than the first current reference value Irefl, Icomp1 is at a low level. In FIG. 4, a clock signal (clk signal) is a latch signal of Icomp1, indicating that after Icomp1 changes from a high level to a low level, clk still remains at a high level and effective. When the reset signal changes to a high level and effective to reset the clk signal (which is not shown in the diagram of control logic, and control logic of the reset signal being effective at a high level, effective at a low level, effective at a rising edge, or effective at a falling edge may be set), to change the reset signal to a low level. In other words, a clock signal (clk signal) and a reset signal are combined together to form a reset signal of an external central control system. When both the reset signal and the clk signal are at a high level, it indicates that the reset signal indicates to turn on the normally-on switching transistor. It may be understood that for the reset signal, a reset signal may be independently used as the reset signal (which is not shown in the diagram of control logic, and control logic of the reset signal being effective at a high level, effective at a low level, effective at a rising edge, or effective at a falling edge may be set). A comparison result between the input voltage value of the transformer circuit and the output voltage value of the transformer circuit is Vcomp. Vcomp is at a high level when the input voltage value of the transformer circuit is greater than or equal to the output voltage value of the transformer circuit. Vcomp is at a low level when the input voltage value of the transformer circuit is less than the output voltage value of the transformer circuit. Q4 and Q1 are respectively an on state and an off state of the fourth switching transistor and the first switching transistor. A high level is on, and a low level is off. As shown in FIG. 4, before a moment t4, because an input voltage of the transformer circuit remains less than the output voltage (Vcomp is at a low level), in this case, the transformer circuit normally operates in a boost discharging mode, and the normally-on switching transistor (that is, the first switching transistor Q1) remains in an on state (a high level). At a moment t5, because the input voltage of the transformer circuit is greater than or equal to the output voltage (in this case, Vcomp is at a high level) and the first sampled current value I1 is greater than or equal to the first current reference value Iref1 (in this case, Icomp1 is at a high level), and at the same time clk is latched to a high level, the control circuit turns off the normally-on switching transistor (that is, the first switching transistor Q1 is at a low level). At a moment t6, the reset signal is effective (the reset signal changes to a high level), the high level latched by the clk signal is reset by the reset signal to a low level, indicating the control circuit to turn on the normally-on switching transistor again (that is, the first switching transistor Q1 is at a high level again). Control logic at a moment t7 and a moment t8 in FIG. 4 is consistent with that at the moment t5 and the moment t6, and details are not described herein again. FIG. 4 shows only control logic in an implementation provided in this application. The control logic is applicable to a scenario in which a fault is not completely cleared in a system. However, to avoid a power failure time of the system (that is, a time for cutting off the electrical connection between the load and the power supply) from being excessively long and causing the entire power supply system to be suspended, the electrical connection between the power supply and the load may be temporarily restored through the reset signal. It may be understood that, at the moment t7 after the moment t6, the control circuit may turn off the normally-on switching transistor (that is, the first switching transistor Q1) again. The control logic shown at the moment t6 in FIG. 4 may also be applicable to a scenario in which the system adjusts the transformer circuit to a power supply mode of buck discharging to adapt to a change in impedance at a load terminal, or when the transformer circuit operates in a power supply mode of buck discharging, the central control system may send a corresponding reset signal to the voltage conversion apparatus. In this case, the primary switching transistor is the first switching transistor Q1, and the fourth switching transistor Q4 is a normally-off transistor (different from FIG. 4, a level of Q4 after the moment t6 is at a low level). It can be learned that, at a moment (for example, a moment t7 and a moment t8) after the moment t6, a turn-on waveform and a turn-off waveform of the first switching transistor Q1 may be controlled through the reset signal to be a turn-on waveform and a turn-off waveform of the primary switching transistor. The control logic provided in this application may also be applicable to a scenario in which the transformer circuit is in a power supply mode of buck discharging.

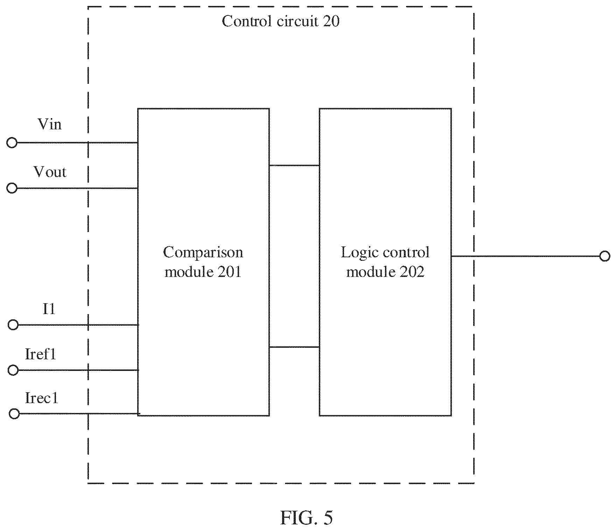

In some feasible implementations, the control circuit may include a control circuit, including a comparison module and a logic control module. FIG. 5 is a schematic diagram of a structure of a control circuit according to an embodiment of this application. As shown in FIG. 5, the control circuit 20 includes a comparison module 201 and a logic control module 202. An input terminal of the comparison module 201 is connected to an input terminal of the transformer circuit, an output terminal of the transformer circuit, and a first sampling point, and an output terminal of the comparison module 201 is connected to the control terminal of the normally-on switching transistor by the logic control module 202. The first sampling point includes the input terminal of the transformer circuit, the output terminal of the transformer circuit, an output terminal of the inductor L, and/or an input terminal of the inductor L. The comparison module 201 is configured to output a voltage comparison signal (for example, Vcomp in FIG. 4) based on a magnitude relationship between the input voltage value Vin of the transformer circuit and the output voltage value Vout of the transformer circuit. The comparison module 201 is further configured to output a first current comparison signal (for example, Icomp1 in FIG. 4) based on a magnitude relationship between the first sampled current value I1 and the first current reference value Iref1. The first sampled current value I1 is a current value at the first sampling point. The logic control module 202 is configured to control, based on the voltage comparison signal and the first current comparison signal, on or off of the normally-on switching transistor.

In this application, the comparison module 201 (the comparison module 201 may include a comparison circuit or a circuit having a comparison function) may output the voltage comparison signal based on the magnitude relationship between the input voltage Vin and the output voltage Vout of the transformer circuit, or may output the first current comparison signal based on the magnitude relationship between the first sampled current value I1 and the first current reference value Iref1. The logic control module 202 (the logic control module 202 may include a logic control circuit (for example, an AND gate circuit or a NAND gate circuit) or a circuit having a logic determining function) may control, based on the voltage comparison signal and the first current comparison signal, on or off of the normally-on switching transistor. It may be understood that the voltage conversion apparatus may determine the running status of the power supply system based on the relationship between the first sampled current value I1 and the first current reference value Iref1. When the power supply system runs normally (for example, the input voltage Vin of the transformer circuit is less than the output voltage Vout), the voltage conversion apparatus may maintain the normally-on switching transistor in the transformer circuit on, to maintain the electrical connection between the power supply and the load. When the input voltage Vin of the transformer circuit is greater than or equal to the output voltage Vout and the current in the power supply system is excessively large due to a fault (for example, a short-circuit fault or an excessively large load) in the power supply system, the voltage conversion apparatus may turn off the normally-on switching transistor in the transformer circuit, to cut off the electrical connection between the power supply and the load. In addition, it may be understood that, after a fault in the power supply system is cleared (for example, the input voltage of the transformer circuit is less than the output voltage) or when a current value in the power supply system is within a safe range, the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

According to this application, when the power supply system runs normally (for example, the input voltage of the transformer circuit is less than the output voltage), the voltage conversion apparatus may maintain the normally-on switching transistor in the transformer circuit on, to maintain the electrical connection between the power supply and the load. When the input voltage of the transformer circuit is greater than or equal to the output voltage and the current in the power supply system is excessively large due to a fault in the power supply system, the voltage conversion apparatus can turn off the normally-on switching transistor in time, to cut off the electrical connection between the power supply and the load. After a fault in the power supply system is cleared or when a current value in the power supply system is within a safe range, the voltage conversion apparatus may also turn on the normally-on switching transistor again, and restore the electrical connection between the power supply and the load in time, to avoid a power failure of the load terminal (or the power supply terminal) caused by long-time disconnection between the power supply and the load. The voltage conversion apparatus can improve safety of the system, and ensure the stable running of the system, so that control is simple, response is quick, applicability is high, and control efficiency is high.

In some feasible implementations, the comparison module 201 may further obtain (for example, in a manner of obtaining, collecting, receiving, detecting, storing, or the like) the first sampled current value I1, a first current reset value Irec1, and the first current reference value Iref1. The comparison module 201 may further output the first current comparison signal based on the magnitude relationship among the first sampled current value I1, the first current reset value Irec1, and the first current reference value Iref1. Further, the logic control module (the logic control module may include a logic control circuit (for example, an AND gate circuit or a NAND gate circuit) or a circuit having a logic determining function) may control, based on the voltage comparison signal and the first current comparison signal, on or off of the normally-on switching transistor. To be specific, after a fault in the power supply system is cleared or when a current value in the power supply system is within a safe range (for example, the first sampled current value I1 is less than or equal to the first current reset value Irec1), the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

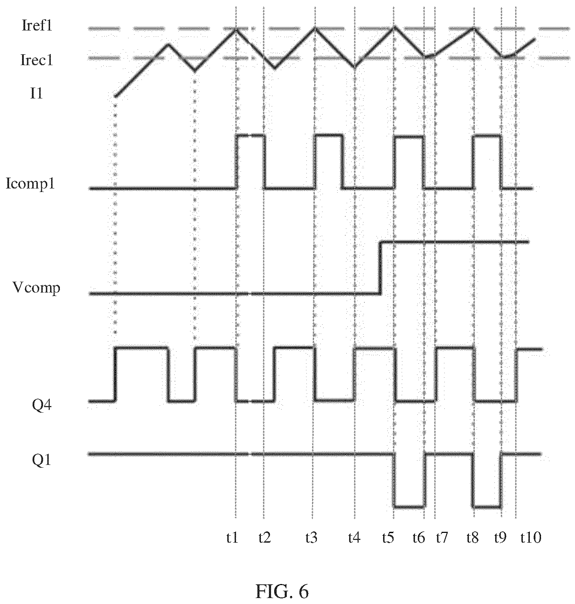

To describe control logic of a control circuit more intuitively, FIG. 6 is a schematic diagram of other control logic of a voltage conversion apparatus according to an embodiment of this application. For ease of description, in FIG. 6, only a case in which a transformer circuit performs boost discharging and supplies power to a load through a power supply is described, to be specific, the fourth switching transistor Q4 is the primary switching transistor, and the first switching transistor Q1 is the normally-on switching transistor. As shown in FIG. 6, a comparison result among a first sampled current value I1, a first current reset value is Irec1 and a first current reference value Iref1 is Icomp1. When the first sampled current value I1 is greater than or equal to the first current reference value Irefl, Icomp1 is at a high level. When the first sampled current value I1 is less than the first current reset value is Irec1, Icomp1 is at a low level. In FIG. 6, a comparison result between the input voltage value of the transformer circuit and the output voltage value of the transformer circuit is Vcomp. Vcomp is at a high level when the input voltage value of the transformer circuit is greater than or equal to the output voltage value of the transformer circuit. Vcomp is at a low level when the input voltage value of the transformer circuit is less than the output voltage value of the transformer circuit. Q4 and Q1 are respectively an on state and an off state of the fourth switching transistor and the first switching transistor. A high level is on, and a low level is off. As shown in FIG. 4, before a moment t4, because an input voltage of the transformer circuit remains less than the output voltage (Vcomp is at a low level), in this case, the transformer circuit normally operates in a boost discharging mode, and the normally-on switching transistor (that is, the first switching transistor Q1) remains in an on state (a high level). At a moment t5, because the input voltage of the transformer circuit is greater than or equal to the output voltage (in this case, Vcomp is at a high level) and the first sampled current value I1 is greater than or equal to the first current reference value Iref1 (in this case, Icomp1 is at a high level), the control circuit turns off the normally-on switching transistor (that is, the first switching transistor Q1 is at a low level). At the moment t6, because the first sampled current value I1 is less than or equal to the first current reset value Irec1, the control circuit turns on the normally-on switching transistor again (that is, the first switching transistor Q1 is at a high level again). Control logic at a moment t8 and a moment t9 in FIG. 6 is consistent with that at the moment t5 and the moment t6, and details are not described herein again. FIG. 6 shows only control logic in an implementation provided in this application. The control logic is applicable to a scenario in which a fault is not completely cleared in a system. However, to avoid a power failure time of the system (that is, a time for cutting off the electrical connection between the load and the power supply) from being excessively long and causing the entire power supply system to be suspended, the electrical connection between the power supply and the load may be temporarily restored through the reset signal. It may be understood that, at the moment t8 after the moment t6, the control circuit may turn off the normally-on switching transistor (that is, the first switching transistor Q1) again.

In some feasible implementations, the transformer circuit may switch between a plurality of power supply modes (for example, boost discharging, buck discharging, boost charging, and buck charging) according to an application scenario. The external central control system may provide different drive signals for the switching transistors of the transformer circuit directly or by using a drive circuit, to control the transformer circuit to be in different power supply modes. For example, when the external central control system uses the fourth switching transistor Q4 as the primary switching transistor and inputs a drive signal of the corresponding primary switching transistor, the transformer circuit is in the boost discharging mode, and supplies power to the load through the power supply. In this case, the first switching transistor Q1 is used as the normally-on switching transistor. In another example, when the external central control system uses the second switching transistor Q2 as the primary switching transistor and inputs a drive signal of the corresponding primary switching transistor, the transformer circuit is in the boost charging mode, and supplies power to the power supply through the load. In this case, the third switching transistor Q3 is used as the normally-on switching transistor. The voltage conversion apparatus may determine the power supply mode of the transformer circuit based on the drive signal that is of the primary switching transistor and that is inputted by the external central control system, so that when the transformer circuit is in a different power supply mode, on or off of the normally-on switching transistor in the current power supply mode is controlled, so that control is simple, response is quick, and applicability is strong.

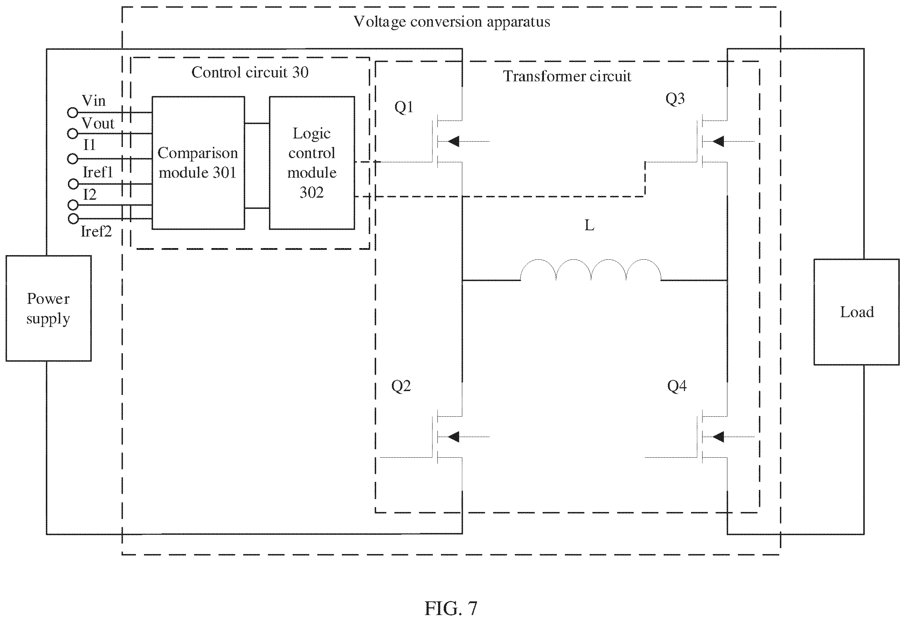

Specifically, FIG. 7 is another schematic diagram of a structure of a voltage conversion apparatus according to an embodiment of this application. As shown in FIG. 7, a control circuit 30 may include a comparison module 301 and a logic control module 302. The logic control module 302 may be connected to a control terminal of the first switching transistor Q1 and/or a control terminal of the third switching transistor Q3 in the transformer circuit. The input terminal of the comparison module 301 may be connected to the input terminal of the transformer circuit, the output terminal of the transformer circuit, the first sampling point, and a second sampling point. The second sampling point includes the input terminal of the transformer circuit, the output terminal of the transformer circuit, an output terminal of the inductor L, and/or an input terminal of the inductor L. The comparison module 301 is further configured to output a second current comparison signal based on a magnitude relationship between a second sampled current value I2 and a second current reference value Iref2. The second sampled current value I2 is a current value at the second sampling point. It may be understood that in a process in which the transformer circuit uses the boost discharging mode to increase a voltage of the power supply to a voltage that matches the load to supply power to the load, the first switching transistor Q1 in the transformer circuit is used as the normally-on switching transistor, and the fourth switching transistor Q4 is used as a primary switching transistor. In a process in which the transformer circuit uses the boost charging mode to increase a voltage of the load to a voltage that matches the power supply to supply power to the power supply, the third switching transistor Q3 in the transformer circuit is used as the normally-on switching transistor, and the second switching transistor Q2 is used as the primary switching transistor.

Further, it may be understood that in some application scenarios (for example, a scenario in which the power supply mode of the transformer circuit is frequently switched), the comparison module may output the first current comparison signal based on the magnitude relationship between the first sampled current value I1 and the first current reference value Irefl, and may output the second current comparison signal based on the magnitude relationship between the second sampled current value I2 and the second current reference value Iref2. The first sampled current value I1 may be a current value at the first sampling point that is set for the first switching transistor Q1 as the normally-on switching transistor, and the second sampled current value I2 may be a current value at the second sampling point that is set for the third switching transistor Q3 as the normally-on switching transistor. Alternatively, the first sampled current value I1 may be a current value at the first sampling point that is set for the third switching transistor Q3 as the normally-on switching transistor, and the second sampled current value I2 may be a current value at the second sampling point that is set for the first switching transistor Q1 as the normally-on switching transistor, which may be specifically determined according to an application scenario. To be specific, when the transformer circuit is in a power supply mode (for example, the boost discharging mode or the boost charging mode), if a fault (for example, the load terminal is short-circuited or overloaded, or the power supply terminal is short-circuited or overloaded) occurs in the power supply system, the actual output voltage Vout of the transformer circuit is greater than or equal to the input voltage Vin of the transformer circuit, and the current in the power supply system is excessively large (for example, the first sampled current value I1 is greater than or equal to the first current reference value Irefl, or the second sampled current value I2 is greater than or equal to the second current reference value Iref2), the voltage conversion apparatus may turn off the normally-on switching transistor (for example, the first switching transistor Q1 or the third switching transistor Q3) in the transformer circuit, to cut off the electrical connection between the power supply and the load.

According to this application, the voltage conversion apparatus may determine the running status of the power supply system based on the magnitude relationship between the input voltage Vin and the output voltage Vout of the transformer circuit, the relationship between the first sampled current value I1 and the first current reference value Irefl, and the relationship between the second sampled current value I2 and the second current reference value Iref2. When the transformer circuit uses different power supply modes, if the input voltage Vin of the transformer circuit is greater than or equal to the output voltage Vout and the current in the power supply system is excessively large due to a fault in the power supply system, the voltage conversion apparatus may turn off the normally-on switching transistor in the transformer circuit in the current power supply mode, to cut off the electrical connection between the power supply and the load, so that safety of the system is improved, response is quick, a structure is simple, a control method is simple, applicability is high, service life of components is prolonged, and costs are reduced.

In some feasible implementations, the comparison module 301 is further configured to output the second current comparison signal based on a magnitude relationship among the second sampled current value I2, a second current reset value Irec2, and the second current reference value Iref2. The second current reset value Irec2 is less than the second current reference value Iref2. It may be understood that, in a scenario in which the power supply mode of the transformer circuit is switched frequently or another application scenario, the comparison module 301 may output the first current comparison signal based on the magnitude relationship among the first sampled current value I1, the first current reference value Irefl, and the first current reset value Irec1, and may output the second current comparison signal based on the magnitude relationship among the second sampled current value I2, the second current reference value Iref2, and the second current reset value Irec2. The first sampled current value I1 may be a current value at the first sampling point that is set for the first switching transistor Q1 as the normally-on switching transistor, and the second sampled current value I2 may be a current value at the second sampling point that is set for the third switching transistor Q3 as the normally-on switching transistor. Alternatively, the first sampled current value I1 may be a current value at the first sampling point that is set for the third switching transistor Q3 as the normally-on switching transistor, and the second sampled current value I2 may be a current value at the second sampling point that is set for the first switching transistor Q1 as the normally-on switching transistor, which may be specifically determined according to an application scenario. To be specific, when the transformer circuit is in a power supply mode (for example, the boost discharging mode or the boost charging mode), if a fault in the power supply system has been cleared or a current value in the power supply system is within a safe range (for example, the first sampled current value I1 is less than or equal to the first current reset value Irec1, or the second sampled current value I2 is less than or equal to the second current reset value Irec2), the voltage conversion apparatus may turn on the normally-on switching transistor (for example, the first switching transistor Q1 or the third switching transistor Q3) in the transformer circuit again, restore the electrical connection between the power supply and the load in time, to avoid a power failure of the load terminal (or the power supply terminal) due to long-time disconnection between the power supply and the load, and ensure stable running of the system, so that control is easy, response is quick, applicability is high, and control efficiency is high.

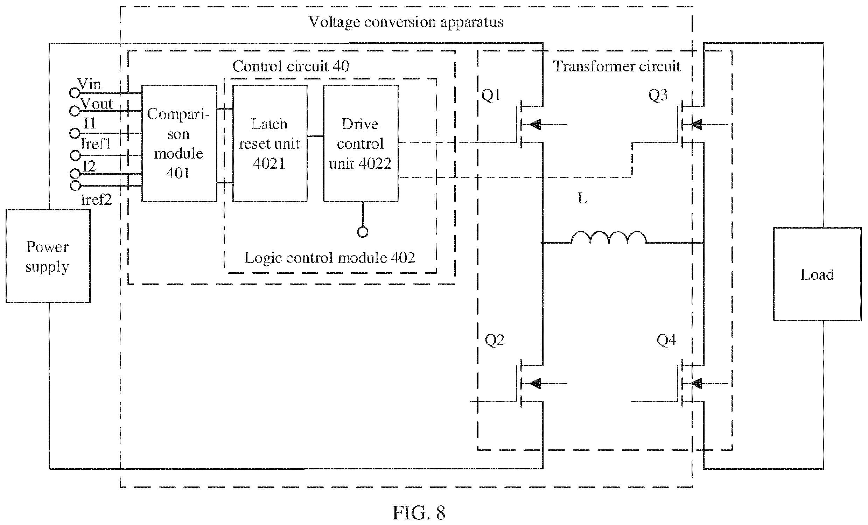

In some feasible implementations, the logic control module includes a latch reset unit and a drive control unit. Specifically, FIG. 8 is another schematic diagram of a structure of a voltage conversion apparatus according to an embodiment of this application. As shown in FIG. 8, a logic control module 402 of a control circuit 40 may include a latch reset unit 4021 and a drive control unit 4022. An output terminal of a comparison module 401 may be connected to the drive control unit 4022 by the latch reset unit 4021. The latch reset unit 4021 is configured to output a target enable control signal based on the voltage comparison signal and a target current comparison signal. The target current comparison signal and the target enable control signal are respectively the first current comparison signal and a first enable control signal, or are respectively the second current comparison signal and a second enable control signal. The drive control unit 4022 is configured to control, based on the target enable control signal and a drive signal that is of a target normally-on switching transistor and that is inputted by the external central control system, on or off of the target normally-on switching transistor. The target enable control signal and the target normally-on switching transistor are respectively the first enable control signal and a first switching transistor Q1, or are respectively the second enable control signal and a third switching transistor Q3. It may be understood that the voltage conversion apparatus may determine the running status of the power supply system based on the voltage comparison signal and the target current comparison signal (for example, the magnitude relationship among the first sampled current value I1, the first current reference value Iref1, and the first current reset value Irec1, or the magnitude relationship among the second sampled current value I2, the second current reference value Iref2, and the second current reset value Irec2). When the power supply system runs normally (for example, the input voltage Vin of the transformer circuit is less than the output voltage Vout), the voltage conversion apparatus may output the target enable control signal (for example, the first enable control signal or the second enable control signal), to maintain the normally-on switching transistor (for example, the first switching transistor Q1 or the third switching transistor Q3) in the transformer circuit on, to maintain the electrical connection between the power supply and the load. When a fault (for example, a short-circuit fault or an excessively large load) occurs in the power supply system, the input voltage Vin of the transformer circuit is greater than or equal to the output voltage Vout, and a current in the power supply system is excessively large (for example, the first sampled current value I1 is greater than or equal to the first current reference value Irefl, or the second sampled current value I2 is greater than or equal to the second current reference value Iref2), the voltage conversion apparatus may output the target enable control signal (for example, the first enable control signal or the second enable control signal), and turn off the normally-on switching transistor (for example, the first switching transistor Q1 or the third switching transistor Q3) in the transformer circuit, to cut off the electrical connection between the power supply and the load. In addition, it may be understood that after a fault in the power supply system is cleared (for example, the input voltage Vin of the transformer circuit is less than the output voltage Vout) or when a current value in the power supply system is within a safe range (for example, the first sampled current value I1 is less than or equal to the first current reset value Irec1, or the second sampled current value I2 is less than or equal to the second current reset value Irec2), the voltage conversion apparatus may output the target enable control signal (for example, the first enable control signal or the second enable control signal), turn on the normally-on switching transistor again, and restore the electrical connection between the power supply and the load in time, to avoid a power failure of the load terminal (or the power supply terminal) due to long-time disconnection between the power supply and the load, and ensure stable running of the system, so that control is easy, response is quick, applicability is high, and control efficiency is high.

In some feasible implementations, the latch reset unit 4021 is further configured to output the target enable control signal based on the voltage comparison signal, the target current comparison signal, and the reset signal of the external central control system. It may be understood that, when determining that a fault in the power supply system has been cleared or to adapt to a change in impedance of the load terminal (or the power supply terminal), the external central control system adjusts the transformer circuit to a power supply mode of buck discharging (or buck charging), or when the transformer circuit operates in a power supply mode of buck discharging (or buck charging), the central control system may send a corresponding reset signal to the voltage conversion apparatus. When obtaining, receiving, or detecting the reset signal of the external central control system, the latch reset unit 4021 may output the target enable control signal based on the voltage comparison signal, the target current comparison signal, and the reset signal of the external central control system, turn on the normally-on switching transistor again (or maintain the normally-on switching transistor in an on or off state based on the power supply mode of buck discharging or buck charging), and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

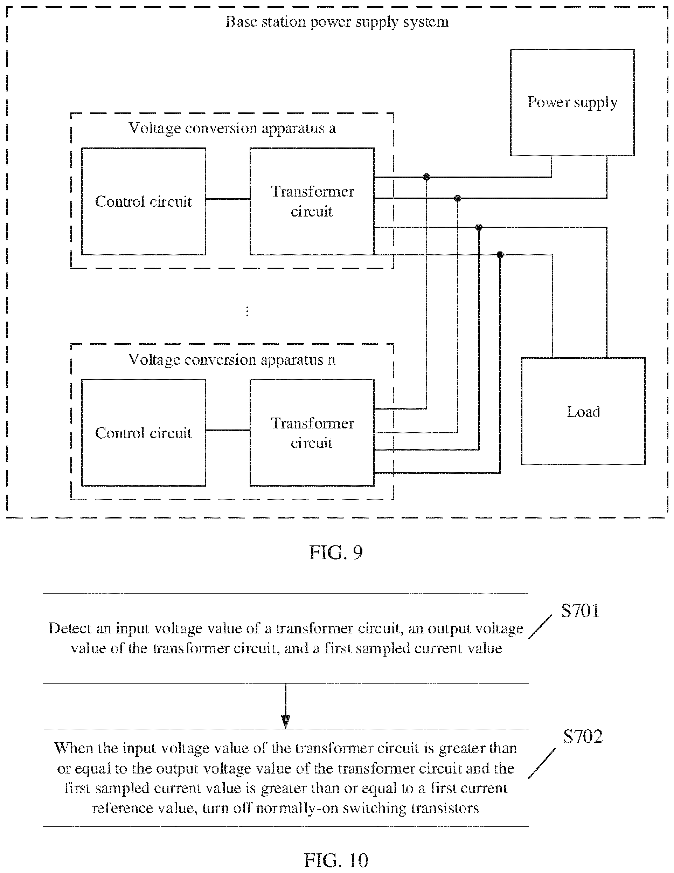

In some feasible implementations, FIG. 9 is a schematic diagram of a structure of a base station power supply system according to an embodiment of this application. As shown in FIG. 9, the base station power supply system further includes a power supply and a voltage conversion apparatus. The voltage conversion apparatus is applicable to any one of the power supply systems shown in FIG. 2 to FIG. 8 or the voltage conversion apparatus in the power supply system. In FIG. 9, only the voltage conversion apparatus shown in FIG. 2 is used as an example for description. It may be understood that, in the base station power supply system shown in FIG. 9, transformer circuits in a plurality of voltage conversion apparatuses (a voltage conversion apparatus a to a voltage conversion apparatus n) one-to-one correspond to the control circuits in the plurality of voltage conversion apparatuses, and the power supply is connected in parallel to the transformer circuits in the plurality of voltage conversion apparatuses and then connected to a load.

According to this application, when an input voltage Vin of a transformer circuit in a voltage conversion apparatus in the plurality of voltage conversion apparatuses is greater than or equal to the output voltage Vout and a current in the power supply system is excessively large due to a fault in the base station power supply system, the voltage conversion apparatus may turn off the normally-on switching transistor in time, to cut off an electrical connection between a power supply of the voltage conversion apparatus and a load, so that while application scenarios are enriched, safety of the system can be improved, service life of elements can be prolonged, and costs can be reduced.

In this application, functional modules in the voltage conversion apparatus and the base station power supply system are formed in various and flexible manners, and can adapt to different power supply environments, to improve diversity of application scenarios of the power supply system and enhance adaptability of the power supply system. In addition, when an input voltage of a transformer circuit is greater than or equal to an output voltage and a current in a power supply system is excessively large due to a fault in the power supply system, any power supply system or voltage conversion apparatus shown in FIG. 2 to FIG. 9 can turn off a normally-on switching transistor in time, to cut off an electrical connection between a power supply and a load, so that safety of the system is improved, response is quick, a structure is simple, a control method is simple, applicability is high, service life of elements is prolonged, and costs are reduced. For ease of description, the control method provided in embodiments of this application is described below by using a structure of the power supply system shown in FIG. 2 as an example.

FIG. 10 is a schematic flowchart of a control method according to this application. The control method provided in this application is applicable to a voltage conversion apparatus, a control circuit of the voltage conversion apparatus, and a transformer circuit. Two ends of the transformer circuit are respectively connected to a power supply and a load. The control circuit is connected to a control terminal of a normally-on switching transistor of the transformer circuit. The normally-on switching transistor is the first switching transistor or the third switching transistor. The control method is also applicable to any one of the power supply system or the voltage conversion apparatus in the power supply system shown in FIG. 1 to FIG. 7. As shown in FIG. 10, the control method provided in this application includes the following steps.

S701: Detect an input voltage value of the transformer circuit, an output voltage value of the transformer circuit, and a first sampled current value.

S702: When the input voltage value of the transformer circuit is greater than or equal to the output voltage value of the transformer circuit and the first sampled current value is greater than or equal to a first current reference value, turn off the normally-on switching transistors.

In implementations provided in this application, the voltage conversion apparatus may determine a running status of the power supply system based on a magnitude relationship between the input voltage and the output voltage of the transformer circuit and a relationship between the first sampled current value and the first current reference value. When the input voltage of the transformer circuit is greater than or equal to the output voltage and the current in the power supply system is excessively large (for example, the first sampled current value is greater than or equal to the first current reference value) due to a fault in the power supply system, the voltage conversion apparatus may turn off the normally-on switching transistor in the transformer circuit, to cut off the electrical connection between the power supply and the load. The control circuit in the voltage conversion apparatus may turn off the normally-on switching transistor when the input voltage value of the transformer circuit is greater than or equal to the output voltage value of the transformer circuit, and the first sampled current value of the transformer circuit is greater than or equal to the first current reference value, to cut off the electrical connection between the load and the power supply. The first sampled current value may include an input current value of the transformer circuit, an output current value of the transformer circuit, an input current value of the inductor, and/or an output current value of the inductor.

According to this application, when an input voltage of a transformer circuit is greater than or equal to an output voltage and a current in a power supply system is excessively large due to a fault in the power supply system, the voltage conversion apparatus can turn off a normally-on switching transistor in time, to cut off an electrical connection between a power supply and a load, so that safety of the system is improved, response is quick, a structure is simple, a control method is simple, applicability is high, service life of elements is prolonged, and costs are reduced.

In embodiments, after step S702 of turning off the normally-on switching transistors is performed, the method further includes: turning on the normally-on switching transistors again when the input voltage value is less than the output voltage value or the first sampled current value is less than or equal to a first current reset value. The first current reset value is less than the first current reference value. After a fault in the power supply system is cleared or when a current value in the power supply system is within a safe range (for example, the first sampled current value is less than or equal to the first current reset value), the voltage conversion apparatus turns on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

In some feasible implementations, after step S702 of turning off the normally-on switching transistors is performed, the method may further include: indicating, based on a reset signal of an external central control system, to turn on the normally-on switching transistors again. When determining that a fault in the power supply system has been cleared or to adapt to a change in impedance of the load terminal (or the power supply terminal), the external central control system adjusts the transformer circuit to a power supply mode of buck discharging (or buck charging), or when the transformer circuit operates in a power supply mode of buck discharging (or buck charging), the central control system may send a corresponding reset signal to the voltage conversion apparatus. When obtaining, receiving, or detecting the reset signal of the external central control system, the voltage conversion apparatus may turn on the normally-on switching transistor again based on an indication of the reset signal of the external central control system (or maintain the normally-on switching transistor in an on or off state based on the power supply mode of buck discharging or buck charging), and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

In some feasible implementations, after step S701 of detecting an input voltage value of the transformer circuit, an output voltage value of the transformer circuit, and a first sampled current value is performed, the method further includes: outputting a voltage comparison signal based on a magnitude relationship between the input voltage value of the transformer circuit and the output voltage value of the transformer circuit; outputting a first current comparison signal based on a magnitude relationship between the first sampled current value and the first current reference value, where the first sampled current value is a current value at the first sampling point; and controlling, based on the voltage comparison signal and the first current comparison signal, on or off of the normally-on switching transistors.

In this application, the comparison module (the comparison module may include a comparison circuit or a circuit having a comparison function) may output the voltage comparison signal based on the magnitude relationship between the input voltage and the output voltage of the transformer circuit, or may output the first current comparison signal based on the magnitude relationship between the first sampled current value and the first current reference value. The logic control module (the logic control module may include a logic control circuit (for example, an AND gate circuit or a NAND gate circuit) or a circuit having a logic determining function) may control, based on the voltage comparison signal and the first current comparison signal, on or off of the normally-on switching transistor. It may be understood that the voltage conversion apparatus may determine the running status of the power supply system based on the relationship between the first sampled current value and the first current reference value. When the power supply system runs normally (for example, the input voltage of the transformer circuit is less than the output voltage), the voltage conversion apparatus may maintain the normally-on switching transistor in the transformer circuit on, to maintain the electrical connection between the power supply and the load. When the input voltage of the transformer circuit is greater than or equal to the output voltage and the current in the power supply system is excessively large due to a fault (for example, a short-circuit fault or an excessively large load) in the power supply system, the voltage conversion apparatus may turn off the normally-on switching transistor in the transformer circuit, to cut off the electrical connection between the power supply and the load. In addition, it may be understood that, after a fault in the power supply system is cleared (for example, the input voltage of the transformer circuit is less than the output voltage) or when a current value in the power supply system is within a safe range, the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

According to this application, when the power supply system runs normally (for example, the input voltage of the transformer circuit is less than the output voltage), the voltage conversion apparatus may maintain the normally-on switching transistor in the transformer circuit on, to maintain the electrical connection between the power supply and the load. When the input voltage of the transformer circuit is greater than or equal to the output voltage and the current in the power supply system is excessively large due to a fault in the power supply system, the voltage conversion apparatus can turn off the normally-on switching transistor in time, to cut off the electrical connection between the power supply and the load. After a fault in the power supply system is cleared or when a current value in the power supply system is within a safe range, the voltage conversion apparatus may also turn on the normally-on switching transistor again, and restore the electrical connection between the power supply and the load in time, to avoid a power failure of the load terminal (or the power supply terminal) caused by long-time disconnection between the power supply and the load. The voltage conversion apparatus can improve safety of the system, and ensure the stable running of the system, so that control is simple, response is quick, applicability is high, and control efficiency is high.

In some feasible implementations, the outputting a first current comparison signal based on a magnitude relationship between the first sampled current value and the first current reference value includes: outputting the first current comparison signal based on a magnitude relationship among the first sampled current value, the first current reset value, and the first current reference value. It may be understood that the comparison module may further output the first current comparison signal based on the magnitude relationship among the first sampled current value, the first current reset value, and the first current reference value. Further, the logic control module (the logic control module may include a logic control circuit (for example, an AND gate circuit or a NAND gate circuit) or a circuit having a logic determining function) may control, based on the voltage comparison signal and the first current comparison signal, on or off of the normally-on switching transistor. To be specific, after a fault in the power supply system is cleared or when a current value in the power supply system is within a safe range (for example, the first sampled current value is less than or equal to the first current reset value), the voltage conversion apparatus may turn on the normally-on switching transistor again, and restore the electrical connection between the power supply and the load in time, to avoid a power failure of the load terminal (or the power supply terminal) caused by long-time disconnection between the power supply and the load, and ensure stable running of the system, so that control is simple, response is quick, applicability is high, and control efficiency is high.

In some feasible implementations, after step S701 of detecting an input voltage value of the transformer circuit, an output voltage value of the transformer circuit, and a first sampled current value is performed, the method further includes: detecting a second sampled current value, where the second sampled current value includes an input current value of the transformer circuit, an output current value of the transformer circuit, input current values of the inductors, and/or output current values of the inductors; and outputting a second current comparison signal based on a magnitude relationship between a second sampled current value and a second current reference value. The second sampled current value is a current value at the second sampling point. It may be understood that in a process in which the transformer circuit uses the boost discharging mode to increase a voltage of the power supply to a voltage that matches the load to supply power to the load, the first switching transistor in the transformer circuit is used as the normally-on switching transistor, and the fourth switching transistor is used as a primary switching transistor. In a process in which the transformer circuit uses the boost charging mode to increase a voltage of the load to a voltage that matches the power supply to supply power to the power supply, the third switching transistor in the transformer circuit is used as the normally-on switching transistor, and the second switching transistor is used as the primary switching transistor. In a scenario in which the power supply mode of the transformer circuit is switched frequently or another application scenario, the comparison module may output the first current comparison signal based on the magnitude relationship between the first sampled current value and the first current reference value, and may output the second current comparison signal based on the magnitude relationship between the second sampled current value and the second current reference value. The first sampled current value may be a current value at the first sampling point that is set for the first switching transistor as the normally-on switching transistor, and the second sampled current value may be a current value at the second sampling point that is set for the third switching transistor as the normally-on switching transistor. Alternatively, the first sampled current value may be a current value at the first sampling point that is set for the third switching transistor as the normally-on switching transistor, and the second sampled current value may be a current value at the second sampling point that is set for the first switching transistor as the normally-on switching transistor, which may be specifically determined according to an application scenario. To be specific, when the transformer circuit is in a power supply mode (for example, the boost discharging mode or the boost charging mode), if a fault (for example, the load terminal is short-circuited or overloaded, or the power supply terminal is short-circuited or overloaded) occurs in the power supply system, the actual output voltage of the transformer circuit is less than or equal to the input voltage of the transformer circuit, and the current in the power supply system is excessively large (for example, the first sampled current value is greater than or equal to the first current reference value, or the second sampled current value is greater than or equal to the second current reference value), the voltage conversion apparatus may turn off the normally-on switching transistor (for example, the first switching transistor or the third switching transistor) in the transformer circuit, to cut off the electrical connection between the power supply and the load.

According to this application, the voltage conversion apparatus may determine the running status of the power supply system based on the magnitude relationship between the input voltage and the output voltage of the transformer circuit, the relationship between the first sampled current value and the first current reference value, and the relationship between the second sampled current value and the second current reference value. When the transformer circuit uses different power supply modes, if the input voltage of the transformer circuit is greater than or equal to the output voltage and the current in the power supply system is excessively large due to a fault in the power supply system, the voltage conversion apparatus may turn off the normally-on switching transistor in the transformer circuit in the current power supply mode, to cut off the electrical connection between the power supply and the load, so that safety of the system is improved, response is quick, a structure is simple, a control method is simple, applicability is high, service life of components is prolonged, and costs are reduced.

In some feasible implementations, the outputting the second current comparison signal based on the magnitude relationship between the second sampled current value and the second current reference value includes: outputting the second current comparison signal based on a magnitude relationship among the second sampled current value, a second current reset value, and the second current reference value. The second current reset value is less than the second current reference value. It may be understood that, in a scenario in which the power supply mode of the transformer circuit is switched frequently or another application scenario, the comparison module may output the first current comparison signal based on the magnitude relationship among the first sampled current value, the first current reference value, and the first current reset value, and may output the second current comparison signal based on the magnitude relationship among the second sampled current value, the second current reference value, and the second current reset value. The first sampled current value may be a current value at the first sampling point that is set for the first switching transistor as the normally-on switching transistor, and the second sampled current value may be a current value at the second sampling point that is set for the third switching transistor as the normally-on switching transistor. Alternatively, the first sampled current value may be a current value at the first sampling point that is set for the third switching transistor as the normally-on switching transistor, and the second sampled current value may be a current value at the second sampling point that is set for the first switching transistor as the normally-on switching transistor, which may be specifically determined according to an application scenario. To be specific, when the transformer circuit is in a power supply mode (for example, the boost discharging mode or the boost charging mode), if a fault in the power supply system has been cleared or a current value in the power supply system is within a safe range (for example, the first sampled current value is less than or equal to the first current reset value, or the second sampled current value is less than or equal to the second current reset value), the voltage conversion apparatus may turn on the normally-on switching transistor (for example, the first switching transistor or the third switching transistor) in the transformer circuit again, and restore the electrical connection between the power supply and the load in time, to avoid a power failure of the load terminal (or the power supply terminal) due to long-time disconnection between the power supply and the load, and ensure stable running of the system, so that control is easy, response is quick, applicability is high, and control efficiency is high.

In some feasible implementations, after step S701 of detecting an input voltage value of the transformer circuit, an output voltage value of the transformer circuit, and a first sampled current value is performed, the method further includes: outputting a target enable control signal based on the voltage comparison signal and a target current comparison signal, where the target current comparison signal and the target enable control signal are respectively the first current comparison signal and a first enable control signal, or are respectively the second current comparison signal and a second enable control signal; and controlling, based on the target enable control signal and a drive signal that is of a target normally-on switching transistor and that is inputted by the external central control system, on or off of the target normally-on switching transistor. The target enable control signal and the target normally-on switching transistor are respectively the first enable control signal and a first switching transistor, or are respectively the second enable control signal and a third switching transistor. It may be understood that the voltage conversion apparatus may determine the running status of the power supply system based on the voltage comparison signal and the target current comparison signal (for example, the magnitude relationship among the first sampled current value, the first current reference value, and the first current reset value, or the magnitude relationship among the second sampled current value, the second current reference value, and the second current reset value). When the power supply system runs normally (for example, the input voltage of the transformer circuit is less than the output voltage), the voltage conversion apparatus may output the target enable control signal (for example, the first enable control signal or the second enable control signal), to maintain the normally-on switching transistor (for example, the first switching transistor or the third switching transistor) in the transformer circuit on, to maintain the electrical connection between the power supply and the load. When a fault (for example, a short-circuit fault or an excessively large load) occurs in the power supply system, the input voltage of the transformer circuit is greater than or equal to the output voltage, and a current in the power supply system is excessively large (for example, the first sampled current value is greater than or equal to the first current reference value, or the second sampled current value is greater than or equal to the second current reference value), the voltage conversion apparatus may output the target enable control signal (for example, the first enable control signal or the second enable control signal), and turn off the normally-on switching transistor (for example, the first switching transistor or the third switching transistor) in the transformer circuit, to cut off the electrical connection between the power supply and the load. In addition, it may be understood that after a fault in the power supply system is cleared (for example, the input voltage of the transformer circuit is less than the output voltage) or when a current value in the power supply system is within a safe range (for example, the first sampled current value is less than or equal to the first current reset value, or the second sampled current value is less than or equal to the second current reset value), the voltage conversion apparatus may output the target enable control signal (for example, the first enable control signal or the second enable control signal), turn on the normally-on switching transistor again, and restore the electrical connection between the power supply and the load in time, to avoid a power failure of the load terminal (or the power supply terminal) due to long-time disconnection between the power supply and the load, and ensure stable running of the system, so that control is easy, response is quick, applicability is high, and control efficiency is high.

In some feasible implementations, the outputting a target enable control signal based on the voltage comparison signal and a target current comparison signal includes: outputting the target enable control signal based on the voltage comparison signal, the target current comparison signal, and the reset signal of the external central control system. It may be understood that, when determining that a fault in the power supply system has been cleared or to adapt to a change in impedance of the load terminal (or the power supply terminal), the external central control system adjusts the transformer circuit to a power supply mode of buck discharging (or buck charging), or when the transformer circuit operates in a power supply mode of buck discharging (or buck charging), the central control system may send a corresponding reset signal to the voltage conversion apparatus. When obtaining, receiving, or detecting the reset signal of the external central control system, the latch reset unit may output the target enable control signal based on the voltage comparison signal, the target current comparison signal, and the reset signal of the external central control system, turn on the normally-on switching transistor again (or maintain the normally-on switching transistor in an on or off state based on the power supply mode of buck discharging or buck charging), and restore the electrical connection between the power supply and the load in time, to avoid a power failure of the load terminal (or the power supply terminal) caused by long-time disconnection between the power supply and the load, and further ensure stable running of the system, so that control is simple, response is quick, and applicability is high.

In this application, when an input voltage of a transformer circuit is greater than or equal to an output voltage and a current in a power supply system is excessively large due to a fault in the power supply system, the voltage conversion apparatus can turn off a normally-on switching transistor in time, to cut off an electrical connection between a power supply and a load, so that safety of the system is improved, response is quick, a structure is simple, a control method is simple, applicability is high, service life of elements is prolonged, and costs are reduced.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A voltage conversion apparatus (1), wherein the voltage conversion apparatus comprises a control circuit (10, 20, 30, 40) and a transformer circuit (11), the transformer circuit comprises a first switching transistor (Q1), a second switching transistor (Q2), a third switching transistor (Q3), a fourth switching transistor (Q4), and an inductor (L), the first switching transistor and the second switching transistor are connected in series to a first bridge arm midpoint, the third switching transistor and the fourth switching transistor are connected in series to a second bridge arm midpoint, and the inductor is connected to the first bridge arm midpoint and the second bridge arm midpoint; two ends of the transformer circuit are respectively connected to a power supply and a load, the control circuit is connected to a control terminal of a normally-on switching transistor of the transformer circuit, wherein:
the normally-on switching transistor is the first switching transistor and the fourth switching transistor is a primary switching transistor in the case when the transformer circuit is configured to operate in a boost discharging mode;
the normally-on switching transistor is the third switching transistor and the second switching transistor is a primary switching transistor in the case when the transformer circuit is configured to operate in a boost charging mode; wherein the control circuit is configured to detect an input voltage value of the transformer circuit, an output voltage value of the transformer circuit, and sample a first current value of the transformer circuit, and
**characterised in that** the control circuit is configured to turn off the normally-on switching transistor when an input voltage value of the transformer circuit is greater than or equal to an output voltage value of the transformer circuit and the first sampled current value of the transformer circuit is greater than or equal to a first current reference value, which indicates the power supply or the load is faulty, and to turn off the primary switching transistor when the first sampled current value of the transformer circuit is greater than or equal to the first current reference value;
wherein the control circuit (10, 20, 30, 40) is further configured to: after turning off the normally-on switching transistor (Q1, Q3), turn on the normally-on switching transistor again when the input voltage value is less than the output voltage value or the first sampled current value is less than or equal to a first current reset value, wherein the first current reset value is less than the first current reference value..

2. The voltage conversion apparatus (1) according to claim 1, wherein the first sampled current value comprises an input current value of the transformer circuit (11), an output current value of the transformer circuit, an input current value of the inductor (L), and/or an output current value of the inductor.

3. The voltage conversion apparatus (1) according to any one of claims 1 to 3, wherein the control circuit (10, 20, 30, 40) is further configured to: after turning off the normally-on switching transistor (Q1, Q3), indicate, based on a reset signal of an external central control system, to turn on the normally-on switching transistor again.

4. The voltage conversion (1) apparatus according to claim 3, wherein the control circuit (10, 20, 30, 40) comprises a comparison module (201, 301, 401) and a logic control module (202, 302, 402), an input terminal of the comparison module is connected to an input terminal of the transformer circuit (11), an output terminal of the transformer circuit, and a first sampling point, and an output terminal of the comparison module is connected to the control terminal of the normally-on switching transistor by the logic control module, wherein the first sampling point comprises the input terminal of the transformer circuit, the output terminal of the transformer circuit, an output terminal of the inductor (L), and/or an input terminal of the inductor;
the comparison module is configured to output a voltage comparison signal based on a magnitude relationship between the input voltage value of the transformer circuit and the output voltage value of the transformer circuit;
the comparison module is further configured to output a first current comparison signal based on a magnitude relationship between the first sampled current value and the first current reference value, wherein the first sampled current value is a current value at the first sampling point; and
the logic control module is configured to control, based on the voltage comparison signal and the first current comparison signal, on or off of the normally-on switching transistor (Q1, Q3).

5. The voltage conversion apparatus (1) according to claim 4, wherein the comparison module (201, 301, 401) is further configured to output a first current comparison signal based on a magnitude relationship among the first sampled current value, the first current reset value, and the first current reference value.

6. The voltage conversion apparatus (1) according to claim 5, wherein when the transformer circuit (11) is configured to supply power to the load through the power supply based on a drive signal that is of the primary switching transistor and that is inputted by the external central control system, the fourth switching transistor (Q4) is the primary switching transistor, and the first switching transistor (Q1) is the normally-on switching transistor; and when the transformer circuit is configured to supply power to the power supply through the load based on a drive signal that is of the primary switching transistor and that is inputted by the external central control system, the second switching transistor (Q2) is the primary switching transistor, and the third switching transistor (Q3) is the normally-on switching transistor.

7. The voltage conversion apparatus (1) according to claim 6, wherein the input terminal of the comparison module (201, 301, 401) is connected to the input terminal of the transformer circuit (11), the output terminal of the transformer circuit, the first sampling point, and a second sampling point, and the second sampling point comprises the input terminal of the transformer circuit, the output terminal of the transformer circuit, the output terminal of the inductor (L), and/or the input terminal of the inductor; and
the comparison module is further configured to output a second current comparison signal based on a magnitude relationship between a second sampled current value and a second current reference value, wherein the second sampled current value is a current value at the second sampling point.

8. The voltage conversion apparatus (1) according to claim 7, wherein the comparison module (201, 301, 401) is further configured to output a second current comparison signal based on a magnitude relationship among the second sampled current value, a second current reset value, and the second current reference value, wherein the second current reset value is less than the second current reference value.

9. The voltage conversion apparatus (1) according to claim 8, wherein the logic control module (202, 302, 402) comprises a latch reset unit (4021) and a drive control unit (4022), and the output terminal of the comparison module is connected to the drive control unit by the latch reset unit;
the latch reset unit is configured to output a target enable control signal based on the voltage comparison signal and a target current comparison signal, wherein the target current comparison signal and the target enable control signal are respectively the first current comparison signal and a first enable control signal, or are respectively the second current comparison signal and a second enable control signal; and
the drive control unit is configured to control, based on the target enable control signal and a drive signal that is of a target normally-on switching transistor and that is inputted by the external central control system, on or off of the target normally-on switching transistor, wherein the target enable control signal and the target normally-on switching transistor are respectively the first enable control signal and the first switching transistor (Q1), or are respectively the second enable control signal and the third switching transistor (Q3).

10. The voltage conversion apparatus (1) according to claim 9, wherein the latch reset unit (4021) is further configured to output the target enable control signal based on the voltage comparison signal, the target current comparison signal, and the reset signal of the external central control system.

11. A base station power supply system, wherein the base station power supply system comprises the voltage conversion apparatus (1) according to any one of claims 1 to 10, a power supply, and a base station, the power supply is connected to the base station by the transformer circuit (11).

12. The base station power supply system according to claim 11, wherein the base station power supply system comprises a plurality of voltage conversion apparatuses (1), and the transformer circuits (11) in the plurality of voltage conversion apparatuses one-to-one correspond to the control circuits in the plurality of voltage conversion apparatuses, and the power supply is connected to the base station by the transformer circuits connected in parallel.

13. A control method of a voltage conversion apparatus (1), wherein the method is applied to a voltage conversion apparatus, the voltage conversion apparatus comprises a transformer circuit (11) and a control circuit (10, 20, 30, 40), the transformer circuit comprises a plurality of switching transistors (Q1, Q2, Q3, Q4) and a inductor (L), a power supply is connected to a load by the transformer circuit, the control circuit is connected to control terminals of normally-on switching transistors in the plurality of switching transistors in the transformer circuit, the plurality of switching transistors further comprising a primary switching transistor, and the method comprises:
operating the transformer circuit in a boost charge mode or a boost discharge mode;
detecting an input voltage value of the transformer circuit, an output voltage value of the transformer circuit, and sample a first current value; and **characterised in that**
when the input voltage value of the transformer circuit is greater than or equal to the output voltage value of the transformer circuit and the first sampled current value is greater than or equal to a first current reference value which indicates the power supply or the load is faulty, turning off the normally-on switching transistors; and
when the first sampled current value is greater than or equal to the first current reference value, turning off the primary switching transistor;
wherein after the turning off the normally-on switching transistors (Q1, Q3), the method further comprises:
turning on the normally-on switching transistors again when the input voltage value is less than the output voltage value or the first sampled current value is less than or equal to a first current reset value, wherein the first current reset value is less than the first current reference value.

## Patentansprüche

1. Spannungsumwandlungsvorrichtung (1), wobei die Spannungsumwandlungsvorrichtung eine Steuerschaltung (10, 20, 30, 40) und eine Transformatorschaltung (11) umfasst, die Transformatorschaltung einen ersten Schalttransistor (Q1), einen zweiten Schalttransistor (Q2), einen dritten Schalttransistor (Q3), einen vierten Schalttransistor (Q4) und einen Induktor (L) umfasst, der erste Schalttransistor und der zweite Schalttransistor in Reihe mit einem ersten Brückenarmmittelpunkt verbunden sind, der dritte Schalttransistor und der vierte Schalttransistor in Reihe mit einem zweiten Brückenarmmittelpunkt verbunden sind und der Induktor mit dem ersten Brückenarmmittelpunkt und dem zweiten Brückenarmmittelpunkt verbunden ist; zwei Enden der Transformatorschaltung jeweils mit einer Stromversorgung und einer Last verbunden sind, die Steuerschaltung mit einem Steueranschluss eines NC-Schalttransistors der Transformatorschaltung verbunden ist, wobei:
der NC-Schalttransistor der erste Schalttransistor ist und der vierte Schalttransistor ein primärer Schalttransistor ist, wenn die Transformatorschaltung dazu konfiguriert ist, in einem Boost-Entlademodus betrieben zu werden;
der NC-Schalttransistor der dritte Schalttransistor ist und der zweite Schalttransistor ein primärer Schalttransistor ist, wenn die Transformatorschaltung dazu konfiguriert ist, in einem Boost-Lademodus betrieben zu werden;
wobei die Steuerschaltung dazu konfiguriert ist, einen Eingangsspannungswert der Transformatorschaltung und einen Ausgangsspannungswert der Transformatorschaltung zu erkennen und einen ersten Stromwert der Transformatorschaltung abzutasten, und
**dadurch gekennzeichnet, dass**
die Steuerschaltung dazu konfiguriert ist, den NC-Schalttransistor auszuschalten, wenn ein Eingangsspannungswert der Transformatorschaltung größer oder gleich einem Ausgangsspannungswert der Transformatorschaltung ist und der erste abgetastete Stromwert der Transformatorschaltung größer oder gleich einem ersten Stromreferenzwert ist, was angibt, dass die Stromversorgung oder die Last fehlerhaft ist, und den primären Schalttransistor auszuschalten, wenn der erste abgetastete Stromwert der Transformatorschaltung größer oder gleich dem ersten Stromreferenzwert ist;
wobei die Steuerschaltung (10, 20, 30, 40) ferner zu Folgendem konfiguriert ist: nach dem Ausschalten des NC-Schalttransistors (Q1, Q3), Wiedereinschalten des NC-Schalttransistors, wenn der Eingangsspannungswert kleiner als der Ausgangsspannungswert ist oder der erste abgetastete Stromwert kleiner oder gleich einem ersten Stromrücksetzwert ist, wobei der erste Stromrücksetzwert kleiner als der erste Stromreferenzwert ist.

2. Spannungsumwandlungsvorrichtung (1) nach Anspruch 1, wobei der erste abgetastete Stromwert einen Eingangsstromwert der Transformatorschaltung (11), einen Ausgangsstromwert der Transformatorschaltung, einen Eingangsstromwert des Induktors (L) und/oder einen Ausgangsstromwert des Induktors umfasst.

3. Spannungsumwandlungsvorrichtung (1) nach einem der Ansprüche 1 bis 3, wobei die Steuerschaltung (10, 20, 30, 40) ferner zu Folgendem konfiguriert ist: nach dem Ausschalten des NC-Schalttransistors (Q1, Q3), Angeben, basierend auf einem Rücksetzsignal eines externen zentralen Steuersystems, dass der NC-Schalttransistor wieder einzuschalten ist.

4. Spannungsumwandlungsvorrichtung (1) nach Anspruch 3, wobei die Steuerschaltung (10, 20, 30, 40) ein Vergleichsmodul (201, 301, 401) und ein Logiksteuermodul (202, 302, 402) umfasst, ein Eingangsanschluss des Vergleichsmoduls mit einem Eingangsanschluss der Transformatorschaltung (11), einem Ausgangsanschluss der Transformatorschaltung und einem ersten Abtastpunkt verbunden ist und ein Ausgangsanschluss des Vergleichsmoduls mit dem Steueranschluss des NC-Schalttransistors durch das Logiksteuermodul verbunden ist, wobei der erste Abtastpunkt den Eingangsanschluss der Transformatorschaltung, den Ausgangsanschluss der Transformatorschaltung, einen Ausgangsanschluss des Induktors (L) und/oder einen Eingangsanschluss des Induktors umfasst; das Vergleichsmodul dazu konfiguriert ist, ein Spannungsvergleichssignal basierend auf einer Größenbeziehung zwischen dem Eingangsspannungswert der Transformatorschaltung und dem Ausgangsspannungswert der Transformatorschaltung auszugeben;
das Vergleichsmodul ferner dazu konfiguriert ist, ein erstes Stromvergleichssignal basierend auf einer Größenbeziehung zwischen dem ersten abgetasteten Stromwert und dem ersten Stromreferenzwert auszugeben, wobei der erste abgetastete Stromwert ein Stromwert an dem ersten Abtastpunkt ist; und
das Logiksteuermodul dazu konfiguriert ist, basierend auf dem Spannungsvergleichssignal und dem ersten Stromvergleichssignal den NC-Schalttransistor (Q1, Q3) auf Ein oder Aus zu steuern.

5. Spannungsumwandlungsvorrichtung (1) nach Anspruch 4, wobei das Vergleichsmodul (201, 301, 401) ferner dazu konfiguriert ist, ein erstes Stromvergleichssignal basierend auf einer Größenbeziehung zwischen dem ersten abgetasteten Stromwert, dem ersten Stromrücksetzwert und dem ersten Stromreferenzwert auszugeben.

6. Spannungsumwandlungsvorrichtung (1) nach Anspruch 5, wobei, wenn die Transformatorschaltung (11) dazu konfiguriert ist, die Last über die Stromversorgung basierend auf einem Ansteuersignal, das von dem primären Schalttransistor stammt und das durch das externe zentrale Steuersystem eingegeben wird, mit Strom zu versorgen, der vierte Schalttransistor (Q4) der primäre Schalttransistor ist und der erste Schalttransistor (Q1) der NC-Schalttransistor ist; und,
wenn die Transformatorschaltung dazu konfiguriert ist, die Stromversorgung über die Last basierend auf einem Ansteuersignal, das von dem primären Schalttransistor stammt und das durch das externe zentrale Steuersystem eingegeben wird, mit Strom zu versorgen, der zweite Schalttransistor (Q2) der primäre Schalttransistor ist und der dritte Schalttransistor (Q3) der NC-Schalttransistor ist.

7. Spannungsumwandlungsvorrichtung (1) nach Anspruch 6, wobei der Eingangsanschluss des Vergleichsmoduls (201, 301, 401) mit dem Eingangsanschluss der Transformatorschaltung (11), dem Ausgangsanschluss der Transformatorschaltung, dem ersten Abtastpunkt und einem zweiten Abtastpunkt verbunden ist, und der zweite Abtastpunkt den Eingangsanschluss der Transformatorschaltung, den Ausgangsanschluss der Transformatorschaltung, den Ausgangsanschluss des Induktors (L) und/oder den Eingangsanschluss des Induktors umfasst; und
das Vergleichsmodul ferner dazu konfiguriert ist, ein zweites Stromvergleichssignal basierend auf einer Größenbeziehung zwischen einem zweiten abgetasteten Stromwert und einem zweiten Stromreferenzwert auszugeben, wobei der zweite abgetastete Stromwert ein Stromwert an dem zweiten Abtastpunkt ist.

8. Spannungsumwandlungsvorrichtung (1) nach Anspruch 7, wobei das Vergleichsmodul (201, 301, 401) ferner dazu konfiguriert ist, ein zweites Stromvergleichssignal basierend auf einer Größenbeziehung zwischen dem zweiten abgetasteten Stromwert, einem zweiten Stromrücksetzwert und dem zweiten Stromreferenzwert auszugeben, wobei der zweite Stromrücksetzwert kleiner als der zweite Stromreferenzwert ist.

9. Spannungsumwandlungsvorrichtung (1) nach Anspruch 8, wobei das Logiksteuermodul (202, 302, 402) eine Latch-Reset-Einheit (4021) und eine Antriebssteuereinheit (4022) umfasst und der Ausgangsanschluss des Vergleichsmoduls mit der Antriebssteuereinheit über die Latch-Reset-Einheit verbunden ist;
die Latch-Reset-Einheit dazu konfiguriert ist, ein Ziel-Aktivierungssteuersignal basierend auf dem Spannungsvergleichssignal und einem Ziel-Stromvergleichssignal auszugeben, wobei das Ziel-Stromvergleichssignal und das Ziel-Aktivierungssteuersignal das erste Stromvergleichssignal bzw. ein erstes Aktivierungssteuersignal sind oder das zweite Stromvergleichssignal bzw. ein zweites Aktivierungssteuersignal sind; und
die Antriebssteuereinheit dazu konfiguriert ist, basierend auf dem Ziel-Aktivierungssteuersignal und einem Antriebssignal, das von einem Ziel-NC-Schalttransistor stammt und das durch das externe zentrale Steuersystem eingegeben wird, den Ziel-NC-Schalttransistor auf Ein oder Aus zu steuern, wobei das Ziel-Aktivierungssteuersignal und der Ziel-NC-Schalttransistor das erste Aktivierungssteuersignal bzw. der erste Schalttransistor (Q1) sind oder das zweite Aktivierungssteuersignal bzw. der dritte Schalttransistor (Q3) sind.

10. Spannungsumwandlungsvorrichtung (1) nach Anspruch 9, wobei die Latch-Reset-Einheit (4021) ferner dazu konfiguriert ist, das Ziel-Aktivierungssteuersignal basierend auf dem Spannungsvergleichssignal, dem Ziel-Stromvergleichssignal und dem Reset-Signal des externen zentralen Steuersystems auszugeben.

11. Basisstationsstromversorgungssystem, wobei das Basisstationsstromversorgungssystem die Spannungsumwandlungsvorrichtung (1) nach einem der Ansprüche 1 bis 10, eine Stromversorgung und eine Basisstation umfasst und die Stromversorgung mit der Basisstation durch die Transformatorschaltung (11) verbunden ist.

12. Basisstationsstromversorgungssystem nach Anspruch 11, wobei das Basisstationsstromversorgungssystem eine Vielzahl von Spannungsumwandlungsvorrichtungen (1) umfasst und die Transformatorschaltungen (11) in der Vielzahl von Spannungsumwandlungsvorrichtungen eins zu eins den Steuerschaltungen in der Vielzahl von Spannungsumwandlungsvorrichtungen entsprechen und die Stromversorgung mit der Basisstation durch die parallel geschalteten Transformatorschaltungen verbunden ist.

13. Steuerverfahren einer Spannungsumwandlungsvorrichtung (1), wobei das Verfahren auf eine Spannungsumwandlungsvorrichtung angewendet wird, die Spannungsumwandlungsvorrichtung eine Transformatorschaltung (11) und eine Steuerschaltung (10, 20, 30, 40) umfasst, die Transformatorschaltung eine Vielzahl von Schalttransistoren (Q1, Q2, Q3, Q4) und einen Induktor (L) umfasst, eine Stromversorgung mit einer Last durch die Transformatorschaltung verbunden ist, die Steuerschaltung mit Steueranschlüssen von NC-Schalttransistoren in der Vielzahl von Schalttransistoren in der Transformatorschaltung verbunden ist, wobei die Vielzahl von Schalttransistoren ferner einen primären Schalttransistor umfasst und das Verfahren Folgendes umfasst:
Betreiben der Transformatorschaltung in einem Boost-Lademodus oder einem Boost-Entlademodus;
Erkennen eines Eingangsspannungswerts der Transformatorschaltung, eines Ausgangsspannungswerts der Transformatorschaltung und Abtasten eines ersten Stromwerts; und **dadurch gekennzeichnet, dass**,
wenn der Eingangsspannungswert der Transformatorschaltung größer oder gleich dem Ausgangsspannungswert der Transformatorschaltung ist und der erste abgetastete Stromwert größer oder gleich einem ersten Stromreferenzwert ist, der angibt, dass die Stromversorgung oder die Last fehlerhaft ist, Abschalten der NC-Schalttransistoren; und
wenn der erste abgetastete Stromwert größer oder gleich dem ersten Stromreferenzwert ist, Ausschalten des primären Schalttransistors;
wobei das Verfahren nach dem Ausschalten der NC-Schalttransistoren (Q1, Q3) ferner Folgendes umfasst:
Wiedereinschalten der NC-Schalttransistoren, wenn der Eingangsspannungswert kleiner als der Ausgangsspannungswert ist oder der erste abgetastete Stromwert kleiner oder gleich einem ersten Stromrücksetzwert ist, wobei der erste Stromrücksetzwert kleiner als der erste Stromreferenzwert ist.

## Revendications

1. Appareil de conversion de tension (1), dans lequel l'appareil de conversion de tension comprend un circuit de commande (10, 20, 30, 40) et un circuit transformateur (11), le circuit transformateur comprend un premier transistor de commutation (Q1), un deuxième transistor de commutation (Q2), un troisième transistor de commutation (Q3), un quatrième transistor de commutation (Q4) et une inductance (L), le premier transistor de commutation et le deuxième transistor de commutation sont reliés en série à un premier point médian de bras de pont, le troisième transistor de commutation et le quatrième transistor de commutation sont reliés en série à un second point médian de bras de pont, et l'inductance est reliée au premier point médian de bras de pont et au second point médian de bras de pont ; les deux extrémités du circuit transformateur sont respectivement reliées à une alimentation et à une charge, le circuit de commande est relié à une borne de commande d'un transistor de commutation normalement passant du circuit transformateur, dans lequel :
le transistor de commutation normalement passant est le premier transistor de commutation et le quatrième transistor de commutation est un transistor de commutation primaire dans le cas où le circuit transformateur est configuré pour fonctionner dans un mode de décharge boost ;
le transistor de commutation normalement passant est le troisième transistor de commutation et le deuxième transistor de commutation est un transistor de commutation primaire dans le cas où le circuit transformateur est configuré pour fonctionner dans un mode de charge boost ;
dans lequel le circuit de commande est configuré pour détecter une valeur de tension d'entrée du circuit transformateur, une valeur de tension de sortie du circuit transformateur, et échantillonner une première valeur de courant du circuit transformateur, et
**caractérisé en ce que**
le circuit de commande est configuré pour désactiver le transistor de commutation normalement passant lorsqu'une valeur de tension d'entrée du circuit transformateur est supérieure ou égale à une valeur de tension de sortie du circuit transformateur et la première valeur de courant échantillonnée du circuit transformateur est supérieure ou égale à une première valeur de référence de courant, ce qui indique que l'alimentation électrique ou la charge est défectueuse, et pour désactiver le transistor de commutation primaire lorsque la première valeur de courant échantillonnée du circuit transformateur est supérieure ou égale à la première valeur de référence de courant ;
dans lequel le circuit de commande (10, 20, 30, 40) est également configuré pour : après avoir désactivé le transistor de commutation normalement passant (Q1, Q3), réactiver le transistor de commutation normalement passant lorsque la valeur de tension d'entrée est inférieure à la valeur de tension de sortie ou lorsque la première valeur de courant échantillonnée est inférieure ou égale à une première valeur de réinitialisation de courant, dans lequel la première valeur de réinitialisation de courant est inférieure à la première valeur de référence de courant.

2. Appareil de conversion de tension (1) selon la revendication 1, dans lequel la première valeur de courant échantillonnée comprend une valeur de courant d'entrée du circuit transformateur (11), une valeur de courant de sortie du circuit transformateur, une valeur de courant d'entrée de l'inductance (L) et/ou une valeur de courant de sortie de l'inductance.

3. Appareil de conversion de tension (1) selon l'une quelconque des revendications 1 à 3, dans lequel le circuit de commande (10, 20, 30, 40) est également configuré pour : après avoir désactivé le transistor de commutation normalement passant (Q1, Q3), indiquer, sur la base d'un signal de réinitialisation d'un système de commande central externe, de réactiver le transistor de commutation normalement passant.

4. Appareil de conversion de tension (1) selon la revendication 3, dans lequel le circuit de commande (10, 20, 30, 40) comprend un module de comparaison (201, 301, 401) et un module de commande logique (202, 302, 402), une borne d'entrée du module de comparaison est reliée à une borne d'entrée du circuit transformateur (11), à une borne de sortie du circuit transformateur et à un premier point d'échantillonnage, et une borne de sortie du module de comparaison est reliée à la borne de commande du transistor de commutation normalement passant par le module de commande logique, dans lequel le premier point d'échantillonnage comprend la borne d'entrée du circuit transformateur, la borne de sortie du circuit transformateur, une borne de sortie de l'inductance (L) et/ou une borne d'entrée de l'inductance ;
le module de comparaison est configuré pour émettre un signal de comparaison de tension basé sur une relation d'amplitude entre la valeur de tension d'entrée du circuit transformateur et la valeur de tension de sortie du circuit transformateur ; le module de comparaison est également configuré pour émettre un premier signal de comparaison de courant basé sur une relation d'amplitude entre la première valeur de courant échantillonnée et la première valeur de référence de courant, dans lequel la première valeur de courant échantillonnée est une valeur de courant au premier point d'échantillonnage ; et
le module de commande logique est configuré pour commander, sur la base du signal de comparaison de tension et du premier signal de comparaison de courant, l'activation ou la désactivation du transistor de commutation normalement passant (Q1, Q3).

5. Appareil de conversion de tension (1) selon la revendication 4, dans lequel le module de comparaison (201, 301, 401) est également configuré pour émettre un premier signal de comparaison de courant basé sur une relation d'amplitude entre la première valeur de courant échantillonnée, la première valeur de réinitialisation de courant et la première valeur de référence de courant.

6. Appareil de conversion de tension (1) selon la revendication 5, dans lequel, lorsque le circuit transformateur (11) est configuré pour alimenter la charge par le biais de l'alimentation électrique sur la base d'un signal d'entraînement provenant du transistor de commutation primaire et entré par le système de commande central externe, le quatrième transistor de commutation (Q4) est le transistor de commutation primaire et le premier transistor de commutation (Q1) est le transistor de commutation normalement passant ; et
lorsque le circuit transformateur est configuré pour alimenter l'alimentation électrique par le biais de la charge sur la base d'un signal d'entraînement provenant du transistor de commutation primaire et qui est entré par le système de commande central externe, le deuxième transistor de commutation (Q2) est le transistor de commutation primaire, et le troisième transistor de commutation (Q3) est le transistor de commutation normalement passant.

7. Appareil de conversion de tension (1) selon la revendication 6, dans lequel la borne d'entrée du module de comparaison (201, 301, 401) est reliée à la borne d'entrée du circuit transformateur (11), à la borne de sortie du circuit transformateur, au premier point d'échantillonnage et à un second point d'échantillonnage, et le second point d'échantillonnage comprend la borne d'entrée du circuit transformateur, la borne de sortie du circuit transformateur, la borne de sortie de l'inductance (L) et/ou la borne d'entrée de l'inductance ; et
le module de comparaison est également configuré pour émettre un second signal de comparaison de courant basé sur une relation d'amplitude entre une seconde valeur de courant échantillonnée et une seconde valeur de référence de courant, dans lequel la seconde valeur de courant échantillonnée est une valeur de courant au second point d'échantillonnage.

8. Appareil de conversion de tension (1) selon la revendication 7, dans lequel le module de comparaison (201, 301, 401) est également configuré pour émettre un second signal de comparaison de courant basé sur une relation d'amplitude entre la seconde valeur de courant échantillonnée, une seconde valeur de réinitialisation de courant et la seconde valeur de référence de courant, dans lequel la seconde valeur de réinitialisation de courant est inférieure à la seconde valeur de référence de courant.

9. Appareil de conversion de tension (1) selon la revendication 8, dans lequel le module de commande logique (202, 302, 402) comprend une unité de réinitialisation de verrouillage (4021) et une unité de commande d'entraînement (4022), et la borne de sortie du module de comparaison est reliée à l'unité de commande d'entraînement par l'unité de réinitialisation de verrouillage ;
l'unité de réinitialisation de verrouillage est configurée pour émettre un signal de commande d'activation cible basé sur le signal de comparaison de tension et un signal de comparaison de courant cible, dans lequel le signal de comparaison de courant cible et le signal de commande d'activation cible sont respectivement le premier signal de comparaison de courant et un premier signal de commande d'activation, ou sont respectivement le second signal de comparaison de courant et un second signal de commande d'activation ; et
l'unité de commande d'entraînement est configurée pour commander, sur la base du signal de commande d'activation cible et d'un signal d'entraînement qui est d'un transistor de commutation cible normalement passant et qui est entré par le système de commande central externe, l'activation ou la désactivation du transistor de commutation cible normalement passant, dans lequel le signal de commande d'activation cible et le transistor de commutation cible normalement passant sont respectivement le premier signal de commande d'activation et le premier transistor de commutation (Q1), ou sont respectivement le second signal de commande d'activation et le troisième transistor de commutation (Q3).

10. Appareil de conversion de tension (1) selon la revendication 9, dans lequel l'unité de réinitialisation de verrouillage (4021) est également configurée pour émettre le signal de commande d'activation cible sur la base du signal de comparaison de tension, du signal de comparaison de courant cible et du signal de réinitialisation du système de commande central externe.

11. Système d'alimentation électrique de station de base, dans lequel le système d'alimentation électrique de station de base comprend l'appareil de conversion de tension (1) selon l'une quelconque des revendications 1 à 10, une alimentation électrique et une station de base, l'alimentation électrique est reliée à la station de base par le circuit transformateur (11).

12. Système d'alimentation électrique de station de base selon la revendication 11, dans lequel le système d'alimentation électrique de station de base comprend une pluralité d'appareils de conversion de tension (1), et les circuits transformateur (11) dans la pluralité d'appareils de conversion de tension correspondent un à un aux circuits de commande dans la pluralité d'appareils de conversion de tension, et l'alimentation électrique est reliée à la station de base par les circuits transformateur reliés en parallèle.

13. Procédé de commande d'un appareil de conversion de tension (1), dans lequel le procédé est appliqué à un appareil de conversion de tension, l'appareil de conversion de tension comprend un circuit transformateur (11) et un circuit de commande (10, 20, 30, 40), le circuit transformateur comprend une pluralité de transistors de commutation (Q1, Q2, Q3, Q4) et une inductance (L), une alimentation électrique est reliée à une charge par le circuit transformateur, le circuit de commande est relié aux bornes de commande des transistors de commutation normalement passants de la pluralité de transistors de commutation du circuit transformateur, la pluralité de transistors de commutation comprenant également un transistor de commutation primaire, et le procédé comprend :
la mise en fonctionnement du circuit transformateur en mode de charge boost ou en mode de décharge boost ;
la détection d'une valeur de tension d'entrée du circuit transformateur, d'une valeur de tension de sortie du circuit transformateur, et l'échantillonnage d'une première valeur de courant ; et **caractérisé en ce que**
lorsque la valeur de la tension d'entrée du circuit transformateur est supérieure ou égale à la valeur de la tension de sortie du circuit transformateur et que la première valeur de courant échantillonnée est supérieure ou égale à une première valeur de référence de courant qui indique que l'alimentation ou la charge est défectueuse, la désactivation des transistors de commutation normalement passants ; et
lorsque la première valeur de courant échantillonnée est supérieure ou égale à la première valeur de référence de courant, la désactivation du transistor de commutation primaire ;
dans lequel, après la désactivation des transistors de commutation normalement passants (Q1, Q3), le procédé comprend également :
la remise sous tension des transistors de commutation normalement passants lorsque la valeur de tension d'entrée est inférieure à la valeur de tension de sortie ou lorsque la première valeur de courant échantillonnée est inférieure ou égale à une première valeur de réinitialisation de courant, dans lequel la première valeur de réinitialisation de courant est inférieure à la première valeur de référence de courant.
